(19) Europäisches Patentamt
European Patent Office
Office européen des brevets

(11) EP 4 694 312 A1

(12) EUROPEAN PATENT APPLICATION
published in accordance with Art. 153(4) EPC

(43) Date of publication:
11.02.2026 Bulletin 2026/07

(51) International Patent Classification (IPC):
H04W 28/06 (2009.01)

(21) Application number: 23936876.4

(52) Cooperative Patent Classification (CPC):
H04W 28/06

(22) Date of filing: 12.05.2023

(86) International application number:
PCT/CN2023/094062

(87) International publication number:
WO 2024/234186 (21.11.2024 Gazette 2024/47)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(71) Applicant: Huawei Technologies Co., Ltd.
Shenzhen, Guangdong 518129 (CN)

(72) Inventors:
• DONG, Lei
Shenzhen, Guangdong 518129 (CN)
• TANG, Hao
Shenzhen, Guangdong 518129 (CN)
• WANG, Ting
Shenzhen, Guangdong 518129 (CN)
• GAO, Na
Shenzhen, Guangdong 518129 (CN)
• WEI, Dongdong
Shenzhen, Guangdong 518129 (CN)
• MA, Jianglei
Shenzhen, Guangdong 518129 (CN)

(74) Representative: Pfenning, Meinig & Partner mbB
Patent- und Rechtsanwälte
Theresienhöhe 11a
80339 München (DE)

(54) **COMMUNICATION METHOD AND APPARATUS**

(57) A communication method and apparatus are provided to reduce transmission overheads. In the method, first data is determined as N groups of second data. For example, the first data is determined, based on data distribution, as the N groups of second data that are distributed in a centralized manner. Corresponding M codebooks are determined based on the N groups of second data, so that the N groups of second data can be quantized respectively by using the M codebooks. Transmission overheads can be reduced by quantizing the first data, and a quantity of codewords can be reduced by quantizing the groups of second data that are distributed in a centralized manner, in other words, the transmission overheads are further reduced. Therefore, sending information indicating the M codebooks can indicate that the M codebooks are used to respectively quantize the N groups of second data, so that the transmission overheads can be reduced.

FIG. 4

**Description**

**TECHNICAL FIELD**

This application relates to the communication field, and in particular, to a communication method and apparatus.

**BACKGROUND**

With development of communication technologies, a requirement for data transmission between devices gradually increases. Currently, more devices start to transmit large-scale data between each other. For example, a base station transmits an extremely large-scale artificial intelligence (artificial intelligence, AI) model to a terminal. For another example, in distributed federated learning, each terminal sends, to a central server, a weight or a gradient of a model trained by the terminal by using local sample data, and the central server sends, to each terminal, a result obtained by performing aggregation processing on weights or gradients of the model sent by the terminals.

However, transmission of the large-scale data causes great transmission overheads. Therefore, how to reduce transmission overheads during transmission of large-scale data is a hot topic in current researches.

**SUMMARY**

Embodiments of this application provide a communication method and apparatus, to reduce overheads during transmission of large-scale data.

To achieve the foregoing objective, this application uses the following technical solutions.

According to a first aspect, a communication method is provided, and is performed by a first apparatus. The method includes: determining N groups of second data of first data, and sending information indicating M codebooks, where the M codebooks are determined based on the N groups of second data, the M codebooks are in one-to-one correspondence with the N groups of second data, the M codebooks are used for quantizing the N groups of second data, N is an integer greater than 1, and M is a positive integer less than or equal to N.

It can be learned from the method in the first aspect that, the first data is grouped. For example, the first data is determined, based on data distribution, as the N groups of second data that are distributed in a centralized manner. Corresponding M codebooks are determined based on the N groups of second data, so that the N groups of second data can be quantized respectively by using the M codebooks. Transmission overheads can be reduced by quantizing the first data, and a quantity of codewords can be reduced by quantizing the groups of second data that are distributed in a centralized manner, in other words, the transmission overheads are further reduced. Therefore, sending information indicating the M codebooks can indicate that the M codebooks are used to respectively quantize the N groups of second data, so that the transmission overheads can be reduced.

In a possible design solution, each of the M codebooks corresponds to at least one codebook set, the codebook set is related to a data distribution feature, and the codebook set includes at least one codebook, to implement diversity of codebook selection, so that a codebook suitable for current data transmission can be selected as much as possible.

In a possible implementation, the codebook set is determined based on a correspondence between the data distribution feature and a codebook, to ensure that a codebook determined from the codebook set meets a data transmission requirement.

In a possible implementation, an $i^{th}$ codebook in the M codebooks is a codebook with smallest transmission overheads in a codebook set to which the $i^{th}$ codebook belongs, and i is an integer greater than or equal to 1 and less than or equal to M. In this way, transmission overheads corresponding to the M codebooks can be further reduced.

In a possible implementation, the data distribution feature includes a data distribution slope and/or a data expectation. The data distribution slope may be a probability density function distribution slope or a cumulative distribution function distribution slope corresponding to data. To be specific, the data distribution slope may reflect a distribution status of the data. For example, a larger value of the data distribution slope indicates more centralized data distribution. The data expectation may also reflect the data distribution. Therefore, a data distribution concentration degree can be accurately reflected based on the data distribution slope and/or data expectation.

In a possible implementation, a quantization error of a codebook in the codebook set is less than or equal to a quantization error threshold, so that accuracy of quantizing the N groups of second data by using the M codebooks can be ensured.

Further, the quantization error threshold is preconfigured or predefined, or may be determined in any other possible manner. For example, the quantization error threshold is dynamically generated based on an actual situation. This is not specifically limited, and an appropriate manner may be selected based on an actual situation.

In a possible design solution, transmission overheads corresponding to the M codebooks are less than a transmission overhead threshold. The transmission overheads may be a maximum quantity of bits that are allowed to be transmitted. In this way, it can be ensured that the transmission overheads meet an actual transmission requirement, and excessive transmission overheads are avoided.

In a possible implementation, the transmission overheads include at least one of the following: codebook indication overheads, group identifier overheads, or transmission overheads for N groups of quantized second data. The codebook indication overheads are transmission overheads of the information indicating the M codebooks. When the information includes the M codebooks, the codebook indication overheads are overheads for transmitting the M codebooks. Alternatively, when the information includes indexes of the M codebooks, the codebook indication overheads are overheads for transmitting the M codebooks. The group identifier overheads are overheads needed for transmitting group identifiers of the N groups of second data, and the group identifiers of the N groups of second data indicate correspondences between the N groups of second data and the first data. The transmission overheads for the N groups of quantized second data are overheads needed for transmitting the N groups of second data quantized by using the M codebooks. When different data is sent, overheads corresponding to the data may be determined. For example, when only the information indicating the M codebooks is sent, the transmission overheads are the codebook indication overheads. For another example, when the information indicating the M codebooks, the group identifiers, and N groups of quantized second data are sent, the transmission overheads are the codebook indication overheads, the group identifier overheads, and the transmission overheads for the N groups of quantized second data. In other words, the transmission overheads corresponding to the M codebooks can be flexibly determined based on an actual sending status.

In a possible design solution, the method in the first aspect further includes: sending first information, where the first information indicates the transmission overheads corresponding to the M codebooks, so that another device, for example, a device on a network side, determines the M codebooks based on the transmission overheads corresponding to the M codebooks, to reduce overheads of a local device and improve running efficiency.

In a possible design solution, the method in the first aspect further includes: receiving second information, where the second information indicates to use the M codebooks, or the second information indicates the M codebooks. In other words, a specific codebook to be used may also be indicated by another device, to reduce the overheads of the local device and improve the running efficiency.

In a possible design solution, the method in the first aspect further includes: sending codewords corresponding to the N groups of quantized second data and/or the group identifiers of the N groups of second data, so that a receiving device may restore, based on the information indicating the M codebooks, the codewords corresponding to the N groups of quantized second data, and the group identifiers, quantized data corresponding to the first data, and use the quantized data.

In a possible implementation, a sending sequence of the codewords corresponding to the N groups of quantized second data is any one of the following: a sequence of the group identifiers of the N groups of second data, a sequence of the groups of quantized second data that have undergone codeword interleaving, or a sequence of data in the first data. The sequence of the group identifiers of the N groups of second data means that the codewords corresponding to the N groups of quantized second data are sequentially sent based on a grouping sequence. In this way, data before transmission does not need to be sorted for the codewords, and power consumption can be reduced. An interleaving function can be provided based on the sequence of the groups of quantized second data that have undergone codeword interleaving or based on the sequence of data in the first data, to avoid a loss of a specific group of data caused by continuous severe attenuation of a channel. It may be understood that a transmission sequence of the N groups of quantized second data may be flexibly selected based on an actual situation.

According to a second aspect, a communication method is provided, and is performed by a second apparatus. The method includes: receiving information indicating M codebooks; and determining the M codebooks based on the information. The M codebooks are determined based on N groups of second data, the M codebooks are in one-to-one correspondence with the N groups of second data, the M codebooks are used for quantizing the N groups of second data, the N groups of second data are determined based on first data, N is an integer greater than 1, and M is a positive integer less than or equal to N.

In a possible design solution, each of the M codebooks corresponds to at least one codebook set, the codebook set is related to a data distribution feature, and the codebook set includes at least one codebook.

In a possible implementation, the codebook set is determined based on a correspondence between the data distribution feature and a codebook.

In a possible implementation, an $i^{th}$ codebook in the M codebooks is a codebook with smallest transmission overheads in a codebook set to which the $i^{th}$ codebook belongs, and i is an integer greater than or equal to 1 and less than or equal to M.

In a possible implementation, the data distribution feature includes a data distribution slope and/or a data expectation.

In a possible implementation, a quantization error of a codebook in the codebook sets is less than or equal to a quantization error threshold.

Further, the quantization error threshold is preconfigured or predefined.

In a possible design solution, transmission overheads corresponding to the M codebooks are less than a transmission overhead threshold.

In a possible implementation, the transmission overheads include at least one of the following: codebook indication overheads, group identifier overheads, or transmission overheads for N groups of quantized second data.

In a possible design solution, the method in the second aspect further includes: receiving first information, where the first information indicates the transmission overheads corresponding to the M codebooks.

In a possible design solution, the method in the second aspect further includes: sending second information, where the second information indicates to use the M codebooks, or the second information indicates the M codebooks.

In a possible design solution, the method in the second aspect further includes: receiving codewords corresponding to the N groups of quantized second data and/or group identifiers of the N groups of second data.

In a possible implementation, the method in the second aspect further includes: determining, based on the M codebooks, the codewords corresponding to the N groups of quantized second data, and the group identifiers, quantized data corresponding to the first data.

In a possible implementation, a sending sequence of the codewords corresponding to the N groups of quantized second data is any one of the following: a sequence of the group identifiers of the N groups of second data, a sequence of the groups of quantized second data that have undergone codeword interleaving, or a sequence of data in the first data.

In addition, for technical effects of the communication method in the second aspect, refer to the technical effects of the communication method in the first aspect. Details are not described herein again.

According to a third aspect, a communication apparatus is provided. The communication apparatus includes modules configured to perform the method in the first aspect, for example, a transceiver module and a processing module. For example, the processing module is configured to determine N groups of second data of first data; and the transceiver module is configured to send information indicating the M codebooks. The M codebooks are determined based on the N groups of second data, the M codebooks are in one-to-one correspondence with the N groups of second data, the M codebooks are used for quantizing the N groups of second data, N is an integer greater than 1, and M is a positive integer less than or equal to N.

In a possible implementation, the transceiver module may include a sending module and a receiving module. The sending module is configured to implement a sending function of the communication apparatus in the third aspect. The receiving module is configured to implement a receiving function of the communication apparatus in the third aspect.

In a possible implementation, the communication apparatus in the third aspect may further include a storage module, and the storage module stores a program or instructions. When the processing module executes the program or the instructions, the communication apparatus is enabled to perform the method in the first aspect.

It may be understood that the communication apparatus in the third aspect may be a terminal, for example, a remote device, may be a chip (system) or another part or component that may be disposed in the terminal, or may be an apparatus including the terminal. This is not limited in this application.

In addition, for technical effects of the communication apparatus in the third aspect, refer to the technical effects of the method in the first aspect. Details are not described herein again.

According to a fourth aspect, a communication apparatus is provided. The communication apparatus includes modules configured to perform the method in the second aspect, for example, a transceiver module and a processing module. For example, the transceiver module is configured to receive information indicating M codebooks. The processing module is configured to determine the M codebooks based on the information. The M codebooks are determined based on the N groups of second data, the M codebooks are in one-to-one correspondence with the N groups of second data, the M codebooks are used for quantizing the N groups of second data, the N groups of second data are determined based on first data, N is an integer greater than 1, and M is a positive integer less than or equal to N.

In a possible implementation, the transceiver module may include a sending module and a receiving module. The sending module is configured to implement a sending function of the communication apparatus in the fourth aspect. The receiving module is configured to implement a receiving function of the communication apparatus in the fourth aspect.

In a possible implementation, the communication apparatus in the fourth aspect may further include a storage module, and the storage module stores a program or instructions. When the processing module executes the program or the instructions, the communication apparatus is enabled to perform the method in the second aspect.

It may be understood that the communication apparatus in the fourth aspect may be a terminal, for example, a remote device, may be a chip (system) or another part or component that may be disposed in the terminal, or may be an apparatus including the terminal. This is not limited in this application.

In addition, for technical effects of the communication apparatus in the fourth aspect, refer to the technical effects of the method in the second aspect. Details are not described herein again.

According to a fifth aspect, a communication apparatus is provided. The communication apparatus includes a processor. The processor is configured to perform the method in any one of the possible implementations of the first aspect.

In a possible design solution, the communication apparatus in the fifth aspect may further include a transceiver.

The transceiver may be a transceiver circuit or an interface circuit. The transceiver may be used by the communication apparatus in the fifth aspect to communicate with another communication apparatus.

In a possible design solution, the communication apparatus in the fifth aspect may further include a memory. The memory and the processor may be integrated together, or may be separately disposed. The memory may be configured to store a computer program and/or data related to the method in the first aspect.

In this embodiment of this application, the communication apparatus in the fifth aspect may be the terminal in the first aspect, a chip (system) or another part or component that may be disposed in the terminal, or an apparatus including the terminal.

In addition, for technical effects of the communication apparatus in the fifth aspect, refer to the technical effects of the method in any implementation of the first aspect. Details are not described herein again.

According to a sixth aspect, a communication apparatus is provided. The communication apparatus includes a processor. The processor is configured to perform the method in any one of the possible implementations of the second aspect.

In a possible design solution, the communication apparatus in the sixth aspect may further include a transceiver. The transceiver may be a transceiver circuit or an interface circuit. The transceiver may be used by the communication apparatus in the sixth aspect to communicate with another communication apparatus.

In a possible design solution, the communication apparatus in the sixth aspect may further include a memory. The memory and the processor may be integrated together, or may be separately disposed. The memory may be configured to store a computer program and/or data related to the method in the second aspect.

In this embodiment of this application, the communication apparatus in the sixth aspect may be the terminal in the second aspect, a chip (system) or another part or component that may be disposed in the terminal, or an apparatus including the terminal.

In addition, for technical effects of the communication apparatus in the sixth aspect, refer to the technical effects of the method in any implementation of the second aspect. Details are not described herein again.

According to a seventh aspect, a communication apparatus is provided. The communication apparatus includes a processor. The processor is coupled to a memory, and the processor is configured to execute a computer program stored in the memory, so that the communication apparatus performs the method in any one of the possible implementations of the first aspect.

In a possible design solution, the communication apparatus in the sixth aspect may further include a transceiver. The transceiver may be a transceiver circuit or an interface circuit. The transceiver may be used by the communication apparatus in the seventh aspect to communicate with another communication apparatus.

In this embodiment of this application, the communication apparatus in the sixth aspect may be the terminal in the first aspect, a chip (system) or another part or component that may be disposed in the terminal, or an apparatus including the terminal.

In addition, for technical effects of the communication apparatus in the seventh aspect, refer to the technical effects of the method in any implementation of the first aspect. Details are not described herein again.

According to an eighth aspect, a communication apparatus is provided. The communication apparatus includes a processor. The processor is coupled to a memory, and the processor is configured to execute a computer program stored in the memory, so that the communication apparatus performs the method in any one of the possible implementations of the second aspect.

In a possible design solution, the communication apparatus in the eighth aspect may further include a transceiver. The transceiver may be a transceiver circuit or an interface circuit. The transceiver may be used by the communication apparatus in the eighth aspect to communicate with another communication apparatus.

In this embodiment of this application, the communication apparatus in the eighth aspect may be the terminal in the second aspect, a chip (system) or another part or component that may be disposed in the terminal, or an apparatus including the terminal.

In addition, for technical effects of the communication apparatus in the eighth aspect, refer to the technical effects of the method in any implementation of the second aspect. Details are not described herein again.

According to a ninth aspect, a communication apparatus is provided. The apparatus includes a processor and a memory. The memory is configured to store a computer program. When the processor executes the computer program, the communication apparatus is enabled to perform the method in any implementation of the first aspect.

In a possible design solution, the communication apparatus in the ninth aspect may further include a transceiver. The transceiver may be a transceiver circuit or an interface circuit. The transceiver may be used by the communication apparatus in the ninth aspect to communicate with another communication apparatus.

In this embodiment of this application, the communication apparatus in the ninth aspect may be the terminal in the first aspect, a chip (system) or another part or component that may be disposed in the terminal, or an apparatus including the terminal.

In addition, for technical effects of the communication apparatus in the ninth aspect, refer to the technical effects of the method in any implementation of the first aspect. Details are not described herein again.

According to a tenth aspect, a communication apparatus is provided, and includes a processor and a memory. The memory is configured to store a computer program. When the processor executes the computer program, the communication apparatus is enabled to perform the method in any implementation of the second aspect.

In a possible design solution, the communication apparatus in the tenth aspect may further include a transceiver. The transceiver may be a transceiver circuit or an interface circuit. The transceiver may be used by the communication apparatus in the tenth aspect to communicate with another communication apparatus.

In this embodiment of this application, the communication apparatus in the tenth aspect may be the terminal in the second aspect, a chip (system) or another part or component that may be disposed in the terminal, or an apparatus including the terminal.

In addition, for technical effects of the communication apparatus in the tenth aspect, refer to the technical effects of the method in any implementation of the second aspect. Details are not described herein again.

According to an eleventh aspect, a communication system is provided. The communication system includes an apparatus configured to perform the method in the first aspect and/or an apparatus configured to perform the method in the second aspect.

According to a twelfth aspect, a computer-readable storage medium is provided, and includes a computer program or instructions. When the computer program or the instructions are run on a computer, the computer is enabled to perform the method in any one of the possible implementations of the first aspect or the second aspect.

According to a thirteenth aspect, a computer program product is provided, and includes a computer program or instructions. When the computer program or the instructions are run on a computer, the computer is enabled to perform the method in any one of the possible implementations of the first aspect or the second aspect.

According to a fourteenth aspect, a chip is provided, and includes a processor. The processor is coupled to a memory, and the processor is configured to execute a computer program stored in the memory, so that the chip performs the method in any one of the possible implementations of the first aspect.

According to a fifteenth aspect, a chip is provided, and includes a processor. The processor is coupled to a memory, and the processor is configured to execute a computer program stored in the memory, so that the chip performs the method in any one of the possible implementations of the second aspect.

## BRIEF DESCRIPTION OF DRAWINGS

FIG. 1 is a diagram of a scalar quantization manner according to an embodiment of this application;
FIG. 2 is a diagram of a vector quantization manner according to an embodiment of this application;
FIG. 3 is a diagram of an architecture of a communication system according to an embodiment of this application;
FIG. 4 is a schematic flowchart 1 of a communication method according to an embodiment of this application;
FIG. 5 is a diagram of a PDF distribution slope according to an embodiment of this application;
FIG. 6 is a diagram of a CDF distribution slope according to an embodiment of this application;
FIG. 7 is a diagram of evenly quantizing two-dimensional data in an entire space according to an embodiment of this application;
FIG. 8 is a diagram of distribution of original data according to an embodiment of this application;
FIG. 9 is a diagram of dividing first data according to a PDF curve according to an embodiment of this application;
FIG. 10 is a diagram 1 of a transmission sequence of third data according to an embodiment of this application;
FIG. 11 is a diagram 2 of a transmission sequence of third data according to an embodiment of this application;
FIG. 12 is a diagram 3 of a transmission sequence of third data according to an embodiment of this application;
FIG. 13 is a diagram 4 of a transmission sequence of third data according to an embodiment of this application;
FIG. 14 is a schematic flowchart 2 of a communication method according to an embodiment of this application;
FIG. 15 is a diagram 1 of a structure of a communication apparatus according to an embodiment of this application; and
FIG. 16 is a diagram 2 of a structure of a communication apparatus according to an embodiment of this application.

## DESCRIPTION OF EMBODIMENTS

For ease of understanding, the following first describes related technologies in embodiments of this application.

1. Scalar quantization

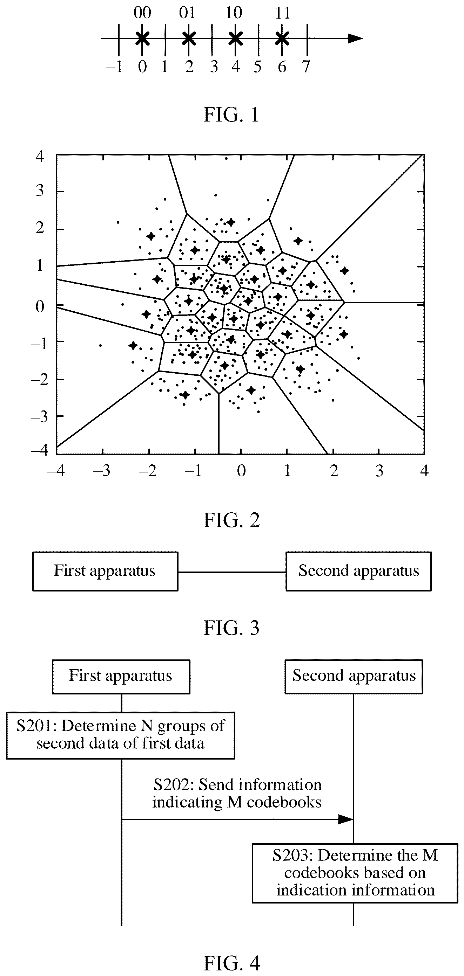

The scalar quantization may be considered as one-dimensional vector quantization, in other words, each piece of data is quantized independently. As shown in FIG. 1 and Table 1, data whose numerical value is in a range of [-1, 1] may be mapped to 0, and a corresponding quantization bit is 00; data whose numerical value is in a range of [1, 3] is mapped to 2, and a corresponding quantization bit is 01; data whose numerical value is in a range of [3, 5] is mapped to 4, and a corresponding quantization bit is 10; and data whose numerical value is in a range of [5, 7] is mapped to 6, and a corresponding quantization bit is 11.

Table 1

| Range of a numerical value | Value obtained through mapping | Bit |
|---|---|---|
| [-1, 1] | 0 | 00 |
| [1, 3] | 2 | 01 |
| [3, 5] | 4 | 10 |
| [5, 7] | 6 | 11 |

For example, when sending original data, a sending apparatus may quantize the original data based on the foregoing mapping relationship. For example, the original data is -0.5, 1.2, 4.5, 3.5, and 6.1. Based on the mapping relationship, the original data may be mapped to corresponding values, that is, 0, 2, 4, 4, and 6. In other words, quantized data corresponding to the original data is 0, 2, 4, 4, and 6. During transmission, bits corresponding to the quantized data, that is, 00, 01, 10, 10, and 11, may be transmitted. After receiving the bits, a receiving apparatus may determine, based on the foregoing mapping relationship, data corresponding to the bits, to obtain the quantized data corresponding to the original data, that is, 0, 2, 4, 4, and 6.

It can be learned that if the sending apparatus directly sends the original data, 160 bits are needed, in other words, each piece of data needs to be represented by 32 bits. However, only 10 bits are needed when the sending apparatus sends the quantized data corresponding to the original data. Therefore, in comparison with directly sending the data by the sending apparatus, transmission overheads can be greatly reduced when the sending apparatus performs scalar quantization on the data and then sends the data.

2. Vector quantization

The vector quantization is to first group original data based on a dimension d, and then quantize the original data by groups. In other words, d pieces of data form a group. As shown in the following Table 2, a codebook in the vector quantization includes a quantity (denoted as k) of codewords, a dimension (denoted as d) of quantized data, and a mapping relationship between a codeword and quantized data. The quantity of codewords is also referred to as a codebook size, and the dimension of quantized data is also referred to as a codebook dimension. $\log_2 k$ may represent a quantity of bits needed for a group of data. As shown in FIG. 2, two-dimensional vector quantization is used as an example. Original data is grouped based on a dimension of 2, in other words, every two pieces of original data form a group. In FIG. 2, each black point corresponds to a group of original data, each star point corresponds to one codeword, a dimension of each codeword is 2, and a total quantity of star points is k, in other words, a quantity of codewords is k. Each star point corresponds to one or more black points. The entire area is divided into a plurality of areas based on a correspondence between the original data and the codeword.

Table 2

| Codeword (k=256) | Quantized data (d=16) |
|---|---|
| 00000000 | 1.2, 1.5, 1.2, 1.3, 2.1, ..., 2.3, 3.0, 1.5 |
| 00000001 | 1.3, 1.8, 1.9, 1.7, 2.5, ..., 2.9, 1.0, 1.6 |
| ... | ... |
| 11111111 | 1.7, 1.9, 2.2, 1.6, 2.5, ..., 2.5, 3.2, 1.3 |

For example, there are a total of 4,800 pieces of original data, and a codebook used for the original data is a codebook shown in Table 2, in other words, a quantity of codewords in the codebook is 256, and a codebook dimension is 16. The original data is grouped based on the codeword dimension. To be specific, 16 pieces of original data form one group, and the 4,800 pieces of original data may be grouped into 300 groups of data. After the 300 groups of data are mapped to the quantized data in Table 2, codewords of quantized data corresponding to the groups of original data may be determined, in other words, 300 codewords may be determined. After determining the codewords, a sending apparatus may send the 300 codewords to a receiving apparatus. After receiving the 300 codewords, the receiving apparatus may determine, based on the codebook in Table 2, the quantized data corresponding to the codewords, to obtain the quantized data corresponding to the 4,800 pieces of original data.

It can be learned that, if the sending apparatus directly sends the 4,800 pieces of original data, 153,600 bits are needed, in other words, 32 bits are usually needed for sending each piece of original data. If the original data is quantized and then sent, only 2,400 bits are needed, in other words, 8 bits are needed for sending each codeword. In other words, in comparison with directly sending the original data, transmission overheads are greatly reduced when the original data is quantized and then sent.

The following describes technical solutions of this application with reference to accompanying drawings.

The technical solutions in embodiments of this application may be applied to various communication systems, for example, a wireless fidelity (wireless fidelity, Wi-Fi) system, a vehicle to everything (vehicle to everything, V2X) communication system, a device-to-device (device-to-device, D2D) communication system, an Internet of Vehicles communication system, a 4th generation (4th generation, 4G) mobile communication system such as a long term evolution (long term evolution, LTE) system and a worldwide interoperability for microwave access (worldwide interoperability for microwave access, WiMAX) communication system, a 5th generation (5th generation, 5G) mobile communication system such as a new radio (new radio, NR) system, and a future communication system such as a 6th generation (6th generation, 6G) mobile communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to represent giving an example, an illustration, or a description. Any embodiment or design solution described as an "example" in this application should not be explained as being more preferred or having more advantages than another embodiment or design solution. Exactly, the term "example" is for presenting a concept in a specific manner.

In embodiments of this application, terms "information (information)", "signal (signal)", "message (message)", "channel (channel)", and "signaling (signaling)" may sometimes be interchangeably used. It should be noted that meanings expressed by the terms are consistent when differences of the terms are not emphasized. Terms "of (of)", "relevant (corresponding, relevant)", and "corresponding (corresponding)" may sometimes be interchangeably used. It should be noted that meanings expressed by the terms are consistent when differences of the terms are not emphasized.

In embodiments of this application, a subscript, for example, $W_1$, may sometimes be written in an incorrect form, for example, W1. Meanings expressed by the forms are consistent when differences of the forms are not emphasized.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of new service scenarios, the technical solutions provided in embodiments of this application are also applicable to similar technical problems.

For ease of understanding embodiments of this application, a communication system shown in FIG. 3 is first used as an example to describe in detail a communication system applicable to embodiments of this application. For example, FIG. 3 is a diagram of an architecture of a communication system to which a communication method according to an embodiment of this application is applicable.

As shown in FIG. 3, the communication system mainly includes a first apparatus and a second apparatus.

The first apparatus and the second apparatus may be network devices or modules (chips or circuits) in the network device, or may be terminal devices or modules (chips or circuits) in the terminal device. For example, the first apparatus is a terminal, and the second apparatus is a network device; the first apparatus is a network device, and the second apparatus is a terminal; the first apparatus and the second apparatus are both terminals, or both the first apparatus and the second apparatus are network devices. This is not limited herein.

The network device is a device that is located on a network side of the communication system and that has a wireless transceiver function, or a chip or a chip system that may be disposed in the device. The network device includes but is not limited to: an access point (access point, AP), for example, a home gateway, a router, a server, a switch, or a bridge, in a wireless fidelity (wireless fidelity, Wi-Fi) system, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless relay node, a wireless backhaul node, a transmission point (transmission reception point, TRP; or transmission point, TP), or the like. The network device may alternatively be a gNB or a transmission point (TRP or TP) in a 5G system, for example, a new radio (new radio, NR) system, or one antenna panel or a group of antenna panels (including a plurality of antenna panels) of a base station in the 5G system. The network device may alternatively be a network node, for example, a baseband unit (BBU) or a distributed unit (distributed unit, DU), that constitutes a gNB or a transmission point, a road side unit (road side unit, RSU) having a base station function, or the like.

The terminal device is a terminal that accesses the communication system and that has a wireless transceiver function, or a chip or a chip system that may be disposed in the terminal. The terminal device may also be referred to as a user apparatus, an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, an RSU having a terminal function, or the like. The terminal device in this application may alternatively be a vehicle-mounted module, a vehicle-mounted assembly, a vehicle-mounted component, a vehicle-mounted chip, or a vehicle-mounted unit that is built in a vehicle as one or more components or units. The vehicle may implement the communication method in this application by using the vehicle-mounted module, the vehicle-mounted assembly, the vehicle-mounted component, the vehicle-mounted chip, or the vehicle-mounted unit that is built in the vehicle.

In the communication system, the first apparatus and the second apparatus may transmit data in a manner of separately quantizing a group of data. For example, data is first grouped, and then a corresponding codebook is determined based on each group of data, and each codebook is transmitted. In this way, each group of data can be quantized separately based on each determined codebook, to reduce overheads during data transmission.

It may be understood that the communication method provided in embodiments of this application is applicable between two apparatuses shown in FIG. 3, for example, between terminal devices, between network devices, and between the terminal device and the network device. For a specific implementation, refer to the following method embodiments. Details are not described herein again.

It should be noted that the solutions in embodiments of this application may alternatively be applied to another communication system, and a corresponding name may alternatively be replaced with a name of a corresponding function in the another communication system.

The following specifically describes the communication method provided in embodiments of this application with reference to FIG. 4 to FIG. 14.

For example, FIG. 4 is a schematic flowchart 1 of a communication method according to an embodiment of this application. The method is applicable to communication between the first apparatus and the second apparatus in the communication system.

As shown in FIG. 4, a procedure of the communication method is as follows.

S201: The first apparatus determines N groups of second data of first data.

The first data may be large-scale data, in other words, the first data includes a large amount of data. For example, the first data may be an AI model, and the AI model may be a feedforward neural network (feedforward neural network, FNN), a convolutional neural network (convolutional neural network, CNN), or a recurrent neural network (recurrent neural network, RNN). Alternatively, the first data may be other large-scale data. This is not limited herein.

The second data is data determined based on the first data, in other words, the first data may be determined as the N groups of second data.

N is an integer greater than 1, and a value of N may be determined based on a distribution slope of the first data. The distribution slope may be a probability density function (probability density function, PDF) distribution slope (denoted as $\rho_{PDF}$) of the first data or a cumulative distribution function (cumulative distribution function, CDF) distribution slope (denoted as $\rho_{CDF}$) of the first data.

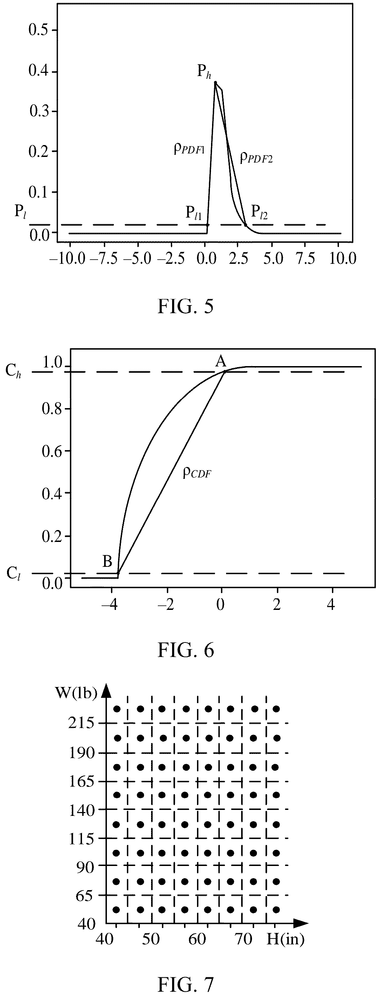

$\rho_{PDF}$ is a smallest value of absolute values of slopes corresponding to connection lines formed by a point corresponding to a highest absolute probability and an intersection point between a lowest reference probability and a probability density function curve (denoted as a PDF curve) in the PDF curve of the first data. The highest absolute probability is a peak value of the PDF curve. When the PDF curve has a plurality of peak values, the highest absolute probability is a probability corresponding to a lowest peak value in the plurality of peak values. For example, as shown in FIG. 5, a highest absolute probability is a probability corresponding to $P_h$ in the figure, and intersection points between a lowest reference probability $P_l$ and a PDF curve are $P_{l1}$ and $P_{l2}$ in the figure, in other words, $P_h$, $P_{l1}$, and $P_{l2}$ are three intersection points in the figure. $P_h$ is separately connected to $P_{l1}$ and $P_{l2}$ to obtain slopes corresponding to two connection lines, and further obtain absolute values of two probability density function distribution slopes, that is, $\rho_{PDF1}$ and $\rho_{PDF2}$. A smaller value of $\rho_{PDF1}$ and $\rho_{PDF2}$ is $\rho_{PDF}$.

$\rho_{CDF}$ is an absolute value of a slope of a connection line of an intersection point between a highest reference probability and a cumulative distribution function curve (denoted as a CDF curve) and an intersection point between a lowest reference probability and the CDF curve in the CDF curve of the first data. For example, as shown in FIG. 6, a highest reference probability is $C_h$, and an intersection point between the highest reference probability and a CDF curve is A. A highest reference probability is $C_l$, and an intersection point between the highest reference probability and the CDF curve is B. An absolute value of a slope corresponding to a connection line formed by connecting A and B is $\rho_{CDF}$.

$\rho_{PDF}$ or $\rho_{CDF}$ of the first data may represent data distribution of the first data. In other words, a larger value of $\rho_{PDF}$ or $\rho_{CDF}$ indicates more centralized distribution of the first data. When data is quantized, more centralized data distribution may indicate fewer used codewords, so that transmission overheads can be reduced.

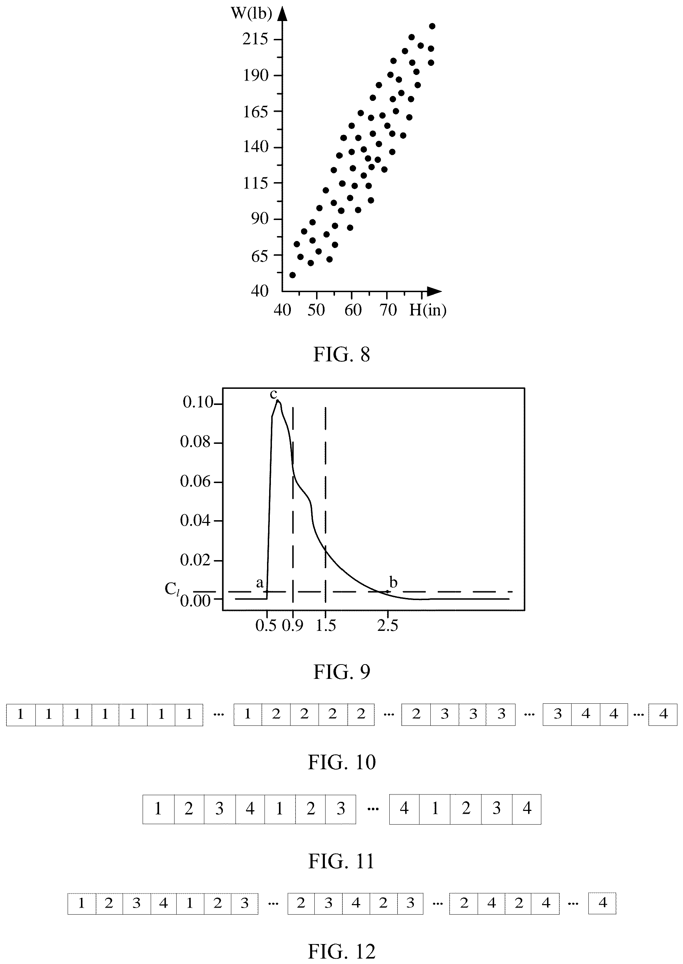

Generally, a gain source of vector quantization in comparison with scalar quantization is mainly dependent on a data distribution feature. In other words, when data is distributed in a centralized manner, low transmission overheads may be used. Specifically, as shown in FIG. 7 and FIG. 8, FIG. 7 shows that two-dimensional data is evenly quantized in an entire space, and each point in the figure represents a codeword; and FIG. 8 shows actual distribution of original data. It can be learned that, when the original data is actually unevenly distributed in the entire space, and is distributed in a centralized manner in a specific area, codewords in two circles in FIG. 7 are useless codewords, in other words, the codewords do not correspond to any original data, in other words, the codewords are not used when the original data in FIG. 8 is quantized. Therefore, a quantity of codewords can be reduced when data distributed in a centralized manner is quantized, reducing transmission overheads.

It can be learned that a value of $\rho_{PDF}$ or $\rho_{CDF}$ of the first data is associated with a codeword used for quantizing data. Therefore, a value of N may be determined based on a value of $\rho_{PDF}$ or $\rho_{CDF}$, reducing transmission overheads. In other words, a smaller value of $\rho_{PDF}$ or $\rho_{CDF}$ may indicate a larger N, or more groups that are obtained by grouping the first data, and the groups of second data can be distributed in a more centralized manner.

Specifically, after $\rho_{PDF}$ or $\rho_{CDF}$ of the first data is determined, the value of N may be determined based on a preset mapping relationship between the value of $\rho_{PDF}$ or $\rho_{CDF}$ and the value of N. For example, as shown in the following Table 3, Table 3 shows a mapping relationship between a distribution slope and the value of N provided in this embodiment of this application. The distribution slope $\rho$ in Table 3 may be $\rho_{PDF}$ or $\rho_{PDF}$.

Table 3

| Distribution slope p | Value of N |
|---|---|
| p $\leq$ 0.4 | 5 |
| 0.4 < $\rho$ $\leq$ 0.7 | 4 |
| 0.7 < $\rho$ $\leq$ 0.8 | 3 |
| 0.8 < $\rho$ $\leq$ 0.9 | 2 |
| 0.9 < $\rho$ | 1 |

After determining the value of N, the first apparatus may determine the first data as the N groups of second data, for example, divide the first data into the N groups of second data. There are a plurality of manners of dividing the first data by the first apparatus. A typical manner is to divide the first data based on an arrangement sequence of the first data, so that quantities of pieces of second data in all groups are equal. Another typical manner is to divide the first data based on distribution of the first data, so that each group of second data is data distributed in a centralized manner. In this case, quantities of pieces of second data in all groups obtained through division may be the same, or may be different. The following separately provides descriptions.

Manner 1: Divide based on the arrangement sequence of the first data.

Specifically, the first data may be equally divided into the N groups of second data based on the arrangement sequence of the first data, so that quantities of pieces of second data in all groups are equal.

Manner 2: Divide based on the distribution of the first data.

Specifically, N-1 boundary points may be determined based on the PDF curve of the first data. The PDF curve is divided at positions of the boundary points. To be specific, the PDF curve is divided into curves including N areas, and each area obtained through division corresponds to a group of second data. A division principle is to divide the data distributed in a centralized manner into a group of data.

For example, as shown in FIG. 9, first data corresponding to a PDF curve in FIG. 9 needs to be divided into three groups of second data. A specific division process is as follows. First, a lowest reference probability curve, that is y = $C_l$, is determined in a PDF curve chart. $C_l$ is a number close to 0. The lowest reference probability curve and the PDF curve have two intersection points: a and b in FIG. 9. A horizontal coordinate of a is 0.5, and a horizontal coordinate of b is 2.5. A horizontal coordinate of a peak value c of the PDF curve is 0.7. Based on the horizontal coordinates of a, b, and c, it may be calculated that a range value between a and c is 0.2, in other words, a value of the horizontal coordinate of c minus the horizontal coordinate of a; and a range value between b and c is 1.8, in other words, a value of the horizontal coordinate of b minus the horizontal coordinate of c. The two calculated range values are compared with a preset range value (for example, 0.5). It can be learned that: The range value between a and c is less than the preset range value, and the range value between b and c is greater than the preset range value. In other words, a slope of a curve 1 corresponding to an interval between a and c is large, in other words, there are many numerical values corresponding to the interval and the numerical values are distributed in a centralized manner; and a slope of a curve 2 corresponding to an interval between b and c is small, in other words, there are fewer numerical values corresponding to the interval and the numerical values are distributed in a non-centralized manner. Therefore, the interval between a and b may be divided into three intervals with a proportion of 2:3:5. To be specific, a centralized part of the first data may be obtained through division as 1/5 of the entire first data, and a non-centralized part of the first data may be sequentially obtained through division as 3/10 and 1/2 of the entire first data. Division is performed based on the proportion, and positions of boundary points are at horizontal coordinates 0.9 and 1.5, and data corresponding to each interval obtained through division is one group of second data.

It may be understood that the foregoing is merely an example division manner, and may be alternatively replaced with any other possible manner for implementation. This is not limited in this embodiment of this application.

In a possible design solution, after the first data is grouped, for example, after the first data is divided into X groups of second data, whether a distribution slope corresponding to each group of second data is greater than a distribution slope threshold may be determined, to determine whether data in each group of second data is distributed in a centralized manner. X is an integer greater than 1, and the distribution slope may be a PDF distribution slope or a CDF distribution slope corresponding to each group of second data. If the distribution slope of each group of second data is greater than the distribution slope threshold, it indicates that data in each group of second data is distributed in a centralized manner. In this case, X is equal to N, and subsequent steps may continue to be performed. If there is at least one group of second data whose distribution slope is less than or equal to the distribution slope threshold, it indicates that data in the group of second data is not distributed in a centralized manner. In this case, the first data may be regrouped. For example, after a value of X is increased, the first data is regrouped. After the grouping is completed, it is determined again whether a distribution slope corresponding to each group of second data is greater than the distribution slope threshold, until the distribution slope corresponding to each group of second data is greater than the distribution slope threshold, in other words, a quantity of groups is N. In addition, the second data whose distribution slope is less than or equal to the distribution slope threshold may be grouped. For example, the group of second data is divided into two groups of data, in other words, X+1 groups of second data may be obtained through division. After the division is completed, it is determined again whether a distribution slope corresponding to each group of second data is greater than the distribution slope threshold, until the distribution slope corresponding to each group of second data is greater than the distribution slope threshold, in other words, a quantity of groups is N.

It may be understood that the foregoing distribution slope threshold may be a fixed value, or may be a plurality of different values, in other words, a plurality of corresponding distribution slope thresholds may be set based on distribution slopes in different ranges. This is not limited herein.

After the first apparatus determines the N groups of second data of the first data, S203 in this method continues to be performed.

S202: The first apparatus sends information indicating M codebooks (denoted as indication information). A second apparatus receives the indication information.

S203: The second apparatus determines the M codebooks based on the indication information.

The following describes S202 and S203 as a whole.

M is a positive integer less than or equal to N. When the groups of second data correspond to different codebooks, the M codebooks may be determined based on the N groups of second data. When there are a plurality of groups of second data corresponding to a same codebook, less than N codebooks may be determined based on the N groups of second data. For example, there are four groups of second data in total, and the groups of second data correspond to different codebooks. In this case, four codebooks may be determined. For another example, there are three groups of second data in total, and a same codebook is used for two groups of second data. In this case, two codebooks may be determined. It can be learned that the M codebooks are codebooks corresponding to the N groups of second data. In other words, the M codebooks are in one-to-one correspondence with the N groups of second data. In other words, each group of second data corresponds to one codebook. In addition, the M codebooks are used for quantizing the N groups of second data. For the codebooks, refer to the foregoing related descriptions.

The M codebooks may be determined based on the N groups of second data, and the M codebooks may be determined by the first apparatus or the second apparatus. The following separately describes two manners of determining the M codebooks.

Manner 1: The first apparatus determines the M codebooks based on the N groups of second data. In other words, the M codebooks are determined based on the N groups of second data.

In Manner 1, each of the M codebooks corresponds to at least one codebook set, the codebook set is related to a data distribution feature, and the codebook set includes at least one codebook. In other words, the first apparatus may determine N codebook sets based on data distribution features of the N groups of second data, and determine the M codebooks based on the N codebook sets. In this way, the M codebooks can be determined quickly and accurately.

The data distribution feature may include a data distribution slope and/or a data expectation. For example, the distribution feature may be a data distribution slope, or a data expectation, or a data distribution slope and a data expectation. The data distribution slope may be a PDF distribution slope or a CDF distribution slope. For related descriptions, refer to the foregoing descriptions. Details are not described herein again.

In a possible implementation, the codebook set is determined based on a correspondence between the data distribution feature and a codebook. In other words, the first apparatus may determine, based on the correspondence between the data distribution feature and the codebook, the M codebook sets corresponding to the data distribution features of the N groups of second data.

Specifically, as shown in Table 4, the correspondence between the data distribution feature and the codebook may be preset or predefined. In other words, codebook sets corresponding to distribution features of different values or distribution features of different ranges may be preset or predefined. After the data distribution features of the N groups of second data are determined, a codebook set corresponding to a data distribution feature of each group of second data may be determined quickly and accurately based on the correspondence, to obtain the N codebook sets.

Table 4

| Distribution slope $\rho$ | Codeword dimension d | Data expectation $\varepsilon$ | Codebook size k | Codebook |
|---|---|---|---|---|
| $\rho \le 0.1$ | 2 | $\varepsilon 1$ | 2 | Codebook 1 |
| | | | 4 | Codebook 2 |
| | | | 8 | Codebook 3 |
| | | | 16 | Codebook 4 |
| | | $\varepsilon 2$ | 2 | Codebook 5 |
| | | | 4 | Codebook 6 |
| | | | 8 | Codebook 7 |
| | | | 16 | Codebook 8 |
| | | | 32 | Codebook 9 |

For example, the first data includes two groups of second data: second data #1 and second data #2, and the data distribution feature is a PDF distribution slope. When the PDF distribution slope is in (0.4, 0.6], a codeword dimension corresponding to data may be 2 and 4. When a codeword dimension is 2, a codeword corresponding to data may be 32, 64, 128, 256, or 512. When a codeword dimension is 4, a codeword corresponding to data may be 64, 128, 256, or 512. When a PDF distribution slope of the second data #1 is 0.5, a codebook set corresponding to the second data #1 includes codebooks whose codeword dimension is 2 and whose codebook sizes are 32, 64, 128, 256, and 512, and codebooks whose codeword dimension is 4 and whose codebook sizes are 64, 128, 256, and 512, in other words, the codebook set corresponding to the second data #1 includes nine codebooks. When a PDF distribution slope of the second data #2 is 0.45, a codebook set of the second data #2 is the same as the codebook set of the second data #1, in other words, the codebook set corresponding to the second data #2 includes nine codebooks.

In a possible implementation, a quantization error of a codebook in the N codebook sets is less than or equal to a quantization error threshold.

The quantization error (quantization error) may be a Euclidean distance between original data before quantization and data corresponding to a quantized codeword. For example, if a codeword dimension is 2, a group of original data before quantization is {1.2, 2.3}, and data corresponding to quantized codewords is {1.0, 2.0}, the quantization error is $\sqrt{(1.2 - 1.0)^2 + (2.3 - 2.0)^2}$. The quantization error may alternatively be an average Euclidean distance, in other words, Euclidean distances are averaged based on a codeword dimension. For example, the quantization error in the foregoing example is $\left(\sqrt{(1.2 - 1.0)^2 + (2.3 - 2.0)^2}\right)/2$. This is not limited herein.

Specifically, a correspondence between the data distribution feature and a codebook whose quantization error is less than or equal to the quantization error threshold may be preset or predefined based on the quantization error threshold. Table 5 shows a correspondence between a distribution slope and a codebook whose quantization error is less than or equal to 0.02 in this embodiment of this application.

Table 5

| Distribution slope p ρ1 < ρ2 < ρ3 | Codeword dimension | Codeword with a quantization error less than or equal to 0.02 |
|---|---|---|
| ρ1 | 2 | 32, 64, 128, 256, 512 |
| | 4 | 256, 512 |
| | 8 | \ |
| | 16 | \ |
| | 32 | \ |
| ρ2 | 2 | 16, 32, 64, 128, 256, 512 |
| | 4 | 64, 128, 256, 512 |
| | 8 | 256, 512 |
| | 16 | 512 |
| | 32 | 256, 512 |
| ρ3 | 2 | 8, 16, 32, 64, 128, 256, 512 |
| | 4 | 32, 64, 128, 256, 512 |
| | 8 | 128, 256, 512 |
| | 16 | 128, 256, 512 |
| | 32 | 128, 256, 512 |

The correspondence between the data distribution feature and the codebook whose quantization error is less than or equal to the quantization error threshold is preset or predefined. In this way, it can be ensured that a quantization error of each codebook determined based on the correspondence is less than or equal to the quantization error threshold, to ensure quantization accuracy.

It may be understood that there are a plurality of choices for the quantization error threshold, for example, 0.02, 0.03, or 0.04. This is not limited herein. When there are a plurality of quantization error thresholds, a correspondence between the data distribution feature and a codebook whose quantization error is less than or equal to different quantization error thresholds may be preset or predefined.

Further, the quantization error threshold may be preconfigured or predefined, for example, configured by a network, or may be determined in any other possible manner. For example, the quantization error threshold is dynamically generated based on an actual situation. This is not specifically limited, and an appropriate manner may be selected based on an actual situation.

In a possible implementation, an $i^{th}$ codebook in the M codebooks is a codebook with smallest transmission overheads in a codebook set to which the $i^{th}$ codebook belongs, and i is an integer greater than or equal to 1 and less than or equal to M. In other words, the first apparatus may determine the M codebooks based on transmission overheads corresponding to each codebook in the N codebook sets.

The transmission overheads corresponding to each codebook in the N codebook sets include codebook indication overheads of each codebook and/or data transmission overheads of each codebook.

The codebook indication overheads of each codebook are overheads needed for transmitting information indicating the codebook, for example, overheads needed for transmitting all content of the codebook, or for another example, overheads needed for transmitting an index corresponding to the codebook. An expression of the overheads needed for transmitting all content of the codebook is $k * d * x$. $k$ is a codebook size of the codebook. $d$ is a codeword dimension of the codebook. $x$ represents a quantity of bits used for transmitting one piece of data in quantized data corresponding to a codeword, and $x$ may be generally 32, in other words, it represents that 32 bits are needed for transmitting a numerical value with a decimal. It may be understood that $x$ may alternatively be another numerical value. This is not limited herein.

The data transmission overheads of each codebook are overheads needed for transmitting second data obtained through quantization by using the codebook. An expression of the data transmission overheads is $(q/d) *$ $\log_2 k$. $q$ is a total quantity of pieces of data in the second data corresponding to the codebook. $d$ is a codeword dimension of the codebook. $k$ is a codebook size of the codebook.

Specifically, transmission overheads of all codebooks corresponding to all codebooks in the N codebook sets may be determined based on the expression of the codebook indication overheads of each codebook and/or the expression of the data transmission overheads of each codebook, and a codebook with smallest transmission overheads is determined from the transmission overheads of the codebooks, to obtain the M codebooks.

For example, N is 2, in other words, there are two codebook sets in total: a codebook set #1 and a codebook set #2. The codebook set #1 includes five codebooks: a codebook #1 to a codebook #5. The codebook set #2 includes 10 codebooks: a codebook #11 to a codebook #20. Transmission overheads corresponding to the codebooks are calculated, to obtain a codebook #1 with smallest transmission overheads in the codebook set #1 and a codebook #20 with smallest transmission overheads in the codebook set #2. Therefore, it may be determined, based on the transmission overheads corresponding to the codebook set #1 and the codebook set #2, that codebooks corresponding to two groups of second data are the codebook #1 and the codebook #20.

It may be understood that, after the value of N is determined, group identifier overheads may be determined based on the value of N and a quantity of pieces of first data. The group identifier is described below. In other words, for the codebooks in the N codebook sets, group identifier overheads corresponding to the codebooks are the same. Therefore, when determining the M codebooks based on the transmission overheads corresponding to each codebook in the N codebook sets, the first apparatus needs to consider only the codebook indication overheads of each codebook and/or the data transmission overheads of each codebook, and does not need to consider the group identifier overheads.

Manner 2: The second apparatus determines the M codebooks.

After determining the N groups of second data of the first data, the first apparatus may send related information such as a quantity of groups to the second apparatus, and the second apparatus determines the M codebooks. The second apparatus may determine the M codebooks based on the related information. For a specific principle of determining a codebook, refer to a principle in the conventional technology. Details are not described herein again.

It may be understood that after the second apparatus determines the M codebooks, the second apparatus may send second information, where the second information indicates the M codebooks. Correspondingly, the first apparatus receives the second information, and determines the M codebooks from the second information. In other words, the M codebooks used by the first apparatus may be directly indicated by the second apparatus.

The indication information may include codebooks in the M codebooks and/or indexes of the M codebooks. Details are described separately below.

In a possible design solution, the indication information may include the M codebooks. To be specific, the indication information includes a quantity of codewords corresponding to each of the M codebooks, a dimension of quantized data, and a mapping relationship between a codeword and quantized data.

In another possible design solution, a plurality of codebooks and indexes of the codebooks are preconfigured on the second apparatus, or a plurality of codebooks and indexes of the codebooks are preconfigured on both the first apparatus and the second apparatus, and the M codebooks belong to the plurality of codebooks. In this case, the indication information may be indexes of the M codebooks.

For example, eight codebooks are preconfigured on the first apparatus and the second apparatus: a codebook #1 to a codebook #8, and indexes of the codebook #1 to the codebook #8 are respectively 1 to 8. If the M codebooks determined by the first apparatus are the codebook #1 to the codebook #5, the indication information is indexes 1 to 5.

It may be understood that after determining the M codebooks, a first device may send the indication information. After the second apparatus receives the indication information, the second apparatus may determine the M codebooks based on the indication information.

Specifically, after the second apparatus receives the indication information, if the indication information includes the M codebooks, the second apparatus may obtain the M codebooks from the indication information, or if the indication information includes the indexes of the M codebooks, the second apparatus may determine, based on the indexes of the M codebooks, the M codebooks corresponding to the indexes of the M codebooks from a plurality of preconfigured codebooks and indexes of the codebooks.

In this embodiment of this application, the N groups of second data are quantized by using the M codebooks, so that overheads during data transmission can be reduced.

In a possible design solution, transmission overheads corresponding to the M codebooks are less than a transmission overhead threshold.

The transmission overheads corresponding to the M codebooks include at least one of the following: codebook indication overheads, group identifier overheads, or transmission overheads obtained for N groups of quantized second data.

The codebook indication overheads are overheads needed for transmitting information indicating the M codebooks, for example, overheads needed for transmitting the M codebooks, or for another example, overheads needed for transmitting the indexes of the M codebooks. An expression of the overheads needed for transmitting the M codebooks is

$\sum_{i=1}^{N} k_i * d_i * x$. $k_i$ is a size of a codebook used for quantizing the $i^{th}$ group of second data in the N groups of second data. $d_i$ is a dimension of the codeword used for quantizing the $i^{th}$ group of second data. For $x$, refer to the foregoing related descriptions. Details are not described herein again.

The group identifier overheads are overheads needed for transmitting group identifiers of the N groups of second data. The group identifiers of the N groups of second data indicate a correspondence between the N groups of second data and the first data. For example, when there are four groups of second data, two bits, that is, 00, 01, 10, and 11, may be used to represent the four groups of second data respectively. In this case, group identifiers are a plurality of bits that use different bits to represent, based on an arrangement sequence of the first data, which group of second data to which each piece of data in the first data belongs. An expression of the group identifier overheads is Q * $\log_2$ N. Q is a total quantity of pieces of data in the first data.

The transmission overheads for the N groups of quantized second data are overheads needed for transmitting the N groups of second data quantized by using the M codebooks. An expression of the transmission overheads for the N groups of quantized second data is $\sum_{i=1}^{N}(Q_i/d_i) * \log_2 k_i$. $Q_i$ is a total quantity of pieces of data corresponding to the $i$th group of second data in the N groups of second data. $d_i$ is a dimension of a codeword used for quantizing the $i$th group of second data. $k_i$ is a size of the codebook used for quantizing the $i$th group of second data.

The transmission overhead threshold represents highest transmission overheads corresponding to the first data, and the transmission overhead threshold may be determined based on a transmission resource and a modulation and coding scheme (modulation and coding scheme, MCS) that correspond to the first data. In other words, a code rate may be first determined based on the MCS, and then the highest transmission overheads corresponding to the first data, for example, a largest quantity of bits that are allowed to be transmitted, are determined based on the code rate and the transmission resource. It may be understood that the transmission overhead threshold may be alternatively determined in another manner. This is not limited herein.

Specifically, after Y codebooks are determined, transmission overheads corresponding to the Y codebooks may be determined, and whether the transmission overheads are less than the transmission overhead threshold is determined, where Y is a positive integer. If the transmission overheads corresponding to the Y codebooks are less than the transmission overhead threshold, Y is M. There are three manners for determining whether the transmission overheads are less than the transmission overhead threshold. Details are described separately below.

Manner 1: The first apparatus determines whether the transmission overheads corresponding to the Y codebooks are less than the transmission overhead threshold.

Specifically, after determining the Y codebooks, the first apparatus may determine, based on an expression of transmission overheads, the transmission overheads corresponding to the Y codebooks, and compare the transmission overheads with the transmission overhead threshold, to determine whether the transmission overheads corresponding to the Y codebooks are less than the transmission overhead threshold.

Manner 2: The first apparatus sends the transmission overheads corresponding to the Y codebooks, and the second apparatus determines whether the transmission overheads corresponding to the Y codebooks are less than the transmission overhead threshold.

Specifically, after determining the Y codebooks, the first apparatus may send first information. Correspondingly, the second apparatus receives the first information.

The first information indicates the transmission overheads corresponding to the Y codebooks. In addition, the first information may be the transmission overheads corresponding to the Y codebooks, or indexes of the Y codebooks. After receiving the first information, the second apparatus may determine, based on the first information, the transmission overheads corresponding to the Y codebooks. For example, when the first information is the transmission overheads corresponding to the Y codebooks, the second apparatus may directly obtain the transmission overheads based on the first information. For another example, when the first information is the indexes of the Y codebooks, the second apparatus may determine the Y codebooks based on the indexes, and then calculate, based on the Y codebooks, the transmission overheads corresponding to the Y codebooks.

After obtaining the transmission overheads corresponding to the Y codebooks, the second apparatus may compare the transmission overheads with the transmission overhead threshold, to determine whether the transmission overheads corresponding to the Y codebooks are less than the transmission overhead threshold. In addition, after determining that the transmission overheads corresponding to the Y codebooks are less than the transmission overhead threshold, the second apparatus may send the second information. Correspondingly, the first apparatus receives the second information. The second information indicates to use the Y codebooks, to be specific, indicates that the transmission overheads corresponding to the Y codebooks are less than the transmission overhead threshold. In other words, the Y codebooks can be used. In other words, in this case, Y is M.

Manner 3: After determining the Y codebooks, the second apparatus determines whether the transmission overheads corresponding to the Y codebooks are less than the transmission overhead threshold.

After determining the Y codebooks based on related information such as a quantity of groups from the first apparatus, the second apparatus may determine the transmission overheads of the Y codebooks based on the Y codebooks and the transmission overheads, and determine whether the transmission overheads corresponding to the Y codebooks are less than the transmission overhead threshold. In addition, when the transmission overheads corresponding to the Y codebooks are less than the transmission overhead threshold, the second apparatus may send the second information. Correspondingly, the first apparatus receives the second information. The second information indicates the Y codebooks. After receiving the second information, the first apparatus may determine the Y codebooks from the second information. In other words, the Y codebooks used by the first apparatus may be directly indicated by the second apparatus. In other words, in this case, Y is M.

It may be understood that the foregoing three manners may be selected based on an actual situation. For example, when the first apparatus determines the Y codebooks, and the transmission overhead threshold is preconfigured on the first apparatus, Manner 1 may be used. For another example, when the first apparatus determines the Y codebooks, and no transmission overhead threshold is preconfigured on the first apparatus, Manner 2 may be used. For still another example, when the second apparatus determines the Y codebooks, Manner 3 may be used.

It may be further understood that if the transmission overheads corresponding to the Y codebooks are greater than or equal to the transmission overhead threshold, the quantity of groups and the distribution slope threshold may be adjusted based on codebook configuration, and the foregoing steps are performed again after the adjustment, so that transmission overheads corresponding to finally determined M codebooks are less than the transmission overhead threshold. It may be understood that, in this case, M is different from Y. The following describes how to adjust the quantity of groups and the distribution slope threshold based on the codebook configuration.

Case 1:

A plurality of codebooks are preconfigured on or predefined for the second apparatus, or a plurality of codebooks are preconfigured on or predefined for the first apparatus and the second apparatus, and the plurality of codebooks include the Y codebooks. In this case, the indication information includes the indexes of the Y codebooks, in other words, overheads of the indication information are low. Therefore, when the first apparatus sends the indication information, the group identifiers, and the N groups of quantized second data, the group identifier overheads and overheads for the N groups of quantized second data are mainly considered. It can be learned from the expression of the group identifier overheads and the expression of the overheads for the N groups of quantized second data that, in this case, the group identifier overheads account for a large proportion, and the quantity of groups should be reduced, to reduce transmission overheads. Because the quantity of groups is reduced, a distribution slope of each group of data is reduced. Therefore, the distribution slope threshold needs to be also reduced.

For example, a plurality of codebooks are preconfigured on or predefined for the second apparatus, or a plurality of codebooks are preconfigured on or predefined for the first apparatus and the second apparatus. The first apparatus divides the first data into four groups of second data, and determines four codebooks based on the four groups of second data. When transmission overheads corresponding to the four codebooks are greater than or equal to the transmission overhead threshold, the quantity of groups may be reduced, and the distribution slope threshold may be reduced. In other words, the first data is re-determined as three groups of second data. When a distribution slope of each group of second data in the three groups of second data is greater than the distribution slope threshold, three codebooks are determined based on the three groups of second data, and then whether transmission overheads corresponding to the three codebooks are less than the transmission overhead threshold is determined. If the transmission overheads corresponding to the three codebooks are greater than or equal to the transmission overhead threshold, the quantity of groups is reduced again, the distribution slope threshold is reduced, and the foregoing steps are repeated until transmission overheads corresponding to the determined M codebooks are less than the transmission overhead threshold. If the transmission overheads corresponding to the three codebooks are less than the transmission overhead threshold, it indicates that the three codebooks can be used, in other words, M is 3.

Case 2:

A plurality of codebooks are not preconfigured on or predefined for the second apparatus. In this case, the indication information includes the Y codebooks, in other words, overheads of the indication information are high. Therefore, when the first apparatus sends the indication information, the group identifiers, and the N groups of quantized second data, the codebook indication overheads, the group identifier overheads, and overheads for the N groups of quantized second data are mainly considered. It can be learned from the expression of the codebook indication overheads, the expression of the group identifier overheads, and the expression of the overheads for the N groups of quantized second data that, in this case, the codebook indication overheads account for a large proportion, and the quantity of groups should be increased, to reduce transmission overheads. Because the quantity of groups is increased, a distribution slope of each group of data is increased. Therefore, the distribution slope threshold needs to be also increased.

For example, a plurality of codebooks are not preconfigured on or predefined for the second apparatus. The first apparatus divides the first data into four groups of second data, and determines four codebooks based on the four groups of second data. When transmission overheads corresponding to the four codebooks are greater than or equal to the transmission overhead threshold, the quantity of groups may be increased, and the distribution slope threshold may be increased. In other words, the first data is re-determined as five groups of second data. When a distribution slope of each group of second data in the five groups of second data is greater than the distribution slope threshold, five codebooks are determined based on the five groups of second data, and then whether transmission overheads corresponding to the five codebooks are less than the transmission overhead threshold is determined. If the transmission overheads corresponding to the five codebooks are greater than or equal to the transmission overhead threshold, the quantity of groups is increased again, the distribution slope is increased, and the foregoing steps are repeated until transmission overheads corresponding to the determined M codebooks are less than the transmission overhead threshold. If the transmission overheads corresponding to the five codebooks are less than the transmission overhead threshold, it indicates that the five codebooks can be used, in other words, M is 5.

It may be understood that the quantity of groups and the distribution slope threshold may alternatively be adjusted in another manner. This is not limited herein.

In a possible design solution, after the M codebooks are determined, the N groups of second data may be further quantized by using the M codebooks, to obtain codewords (denoted as third data) corresponding to the N groups of quantized second data, in other words, codewords corresponding to quantized data corresponding to the N groups of second data. In other words, the first apparatus may further send the third data to the second apparatus. Correspondingly, the second apparatus receives the third data.

There are three sending sequences of the third data. Details are described separately below.

Manner 1: The third data is sent in a sequence of the group identifiers of the N groups of second data.

The group identifier indicates a group of second data to which each piece of data in the third data belongs. For example, a first group of quantized second data has four codewords 00, 01, 00, and 11, and the group identifier indicates that the four codewords 00, 01, 00, and 11 belong to the first group of quantized second data. A sequence of the group identifiers of the N groups of second data means sequentially transmitting, based on a group of second data to which each piece of data in the third data belongs, a codeword corresponding to each group.

Specifically, when the third data is sent, the first group of quantized second data is first transmitted, and then a second group of quantized second data is transmitted. In other words, the N groups of quantized second data are sequentially transmitted until a last group of quantized second data is transmitted.

For example, as shown in FIG. 10, each small grid in FIG. 10 represents one codeword, and a number in each small grid represents which group of second data to which the codeword represented by the small grid belongs. For example, if a number in a first small grid is 1, it indicates that a codeword represented by the small grid belongs to a first group of codewords. There are four groups of second data in total: second data #1, second data #2, second data #3, and second data #4. Four groups of quantized second data are respectively corresponding to 100 codewords, 200 codewords, 150 codewords, and 200 codewords. When the third data is transmitted, the 100 codewords corresponding to the second data #1 are first transmitted; after the 100 codewords are transmitted, the 200 codewords corresponding to the second data #2 are transmitted; after the 200 codewords are transmitted, the 150 codewords corresponding to the second data #3 are transmitted; and after the 150 codewords are transmitted, the 200 codewords corresponding to the second data #3 are finally transmitted. In other words, in FIG. 10, a first ellipsis represents a plurality of codewords corresponding to quantized second data #1, a second ellipsis represents a plurality of codewords corresponding to quantized second data #2, a third ellipsis represents a plurality of codewords corresponding to quantized second data #3, and a fourth ellipsis represents a plurality of codewords corresponding to quantized second data #4.

Manner 2: The third data is sent in a sequence of the groups of quantized second data that have undergone codeword interleaving.

The codeword interleaving means to interleave codewords in different second groups of quantized data before sending. An objective of the codeword interleaving is to enable two adjacent codewords in a sending sequence of the third data to be codewords in different second groups of quantized data as far as possible.

Specifically, before the third data is sent, one codeword may be selected from each of the N groups of quantized second data, and the N codewords are spliced together. According to the rule, codewords of different groups are sequentially spliced together until all the N groups of quantized second data are spliced.

For example, as shown in FIG. 11, each small grid in FIG. 11 represents one codeword, and a number in each small grid represents which group of second data to which the codeword represented by the small grid belongs. There are four groups of second data in total: second data #1, second data #2, second data #3, and second data #4. Four groups of quantized second data are separately corresponding to 100 codewords. When the codewords are interleaved, one codeword from the second data #1 is selected, and the codeword is determined as a first codeword in the third data; one codeword from the second data #2 is selected, and the codeword is determined as a second codeword in the third data; one codeword from the second data #3 is selected, and the codeword is determined as a third codeword in the third data; and one codeword from the second data #4 is selected, and the codeword is determined as a fourth codeword in the third data. Repeat according to the rule to sequentially determine subsequent codewords. In other words, an ellipsis in FIG. 11 represents a plurality of codewords corresponding to groups of quantized second data that are arranged according to the rule.

It may be understood that, if the N groups of quantized second data correspond to different quantities of codewords, one codeword may be first selected from each of the N groups of quantized second data, the N codewords are spliced together according to the rule, until there is a group of quantized second data that has been completely spliced. In this case, there are remaining N-1 groups of quantized second data. One codeword continues to be selected from each of the N-1 groups of quantized second data, the N-1 codewords are spliced together according to the rule, until there is a group of quantized second data that has been completely spliced. Splicing is performed according to the rule until only one group of quantized second data remains, and all remaining codewords of the quantized second data are spliced at an end of arranged codewords.

For example, as shown in FIG. 12, each small grid in FIG. 12 represents one codeword, and a number in each small grid represents which group of second data to which the codeword represented by the small grid belongs. There are four groups of second data in total: second data #1, second data #2, second data #3, and second data #4. Four groups of quantized second data are respectively corresponding to 100 codewords, 200 codewords, 150 codewords, and 220 codewords. When the codewords are interleaved, one codeword from the second data #1 is selected, and the codeword is determined as a first codeword in the third data; one codeword from the second data #2 is selected, and the codeword is determined as a second codeword in the third data; one codeword from the second data #3 is selected, and the codeword is determined as a third codeword in the third data; and one codeword from the second data #4 is selected, and the codeword is determined as a fourth codeword in the third data. According to the rule, an arrangement sequence of 400 codewords can be determined. In other words, a first ellipsis in FIG. 12 represents a plurality of codewords corresponding to the arrangement sequence. In this case, the codebooks of the second data #1 are all spliced, and then one codeword is selected from each of the second data #2, the second data #3, and the second data #4 for splicing. An arrangement sequence of 150 codewords may continue to be determined according to the rule. In this case, the codebooks of the second data #3 are all spliced, and then one codeword is selected from each of the second data #2 and the second data #4 for splicing. According to the rule, an arrangement sequence of 100 codewords may continue to be determined. In other words, a second ellipsis in FIG. 12 represents a plurality of codewords that are first spliced in a sequence of selecting one codeword from each of the second data #2, the second data #3, and the second data #4 for splicing, and then a plurality of codewords that are spliced in a sequence of selecting one codeword from each of the second data #2 and the second data #4 for splicing. In this case, the codebooks of the second data #2 are all spliced, and only 20 codewords in the second data #4 remain. In this case, all the 20 codewords are spliced at the end of the arranged codewords. In other words, a third ellipsis in FIG. 12 represents a plurality of codewords corresponding to the quantized second data #4.

It may be further understood that one codeword is selected from each of the N groups of quantized second data, and the N codewords may be spliced in a plurality of sequences. For example, the N groups of quantized second data are sequentially arranged, or the N groups of quantized second data are arranged in another sequence. This is not limited herein.

Manner 3: The third data is transmitted in a sequence of data in the first data.

The sequence of the data in the first data is a sequence of original data before the first data is grouped.

Specifically, the third data is sent after the third data is arranged in the sequence of the data in the first data.

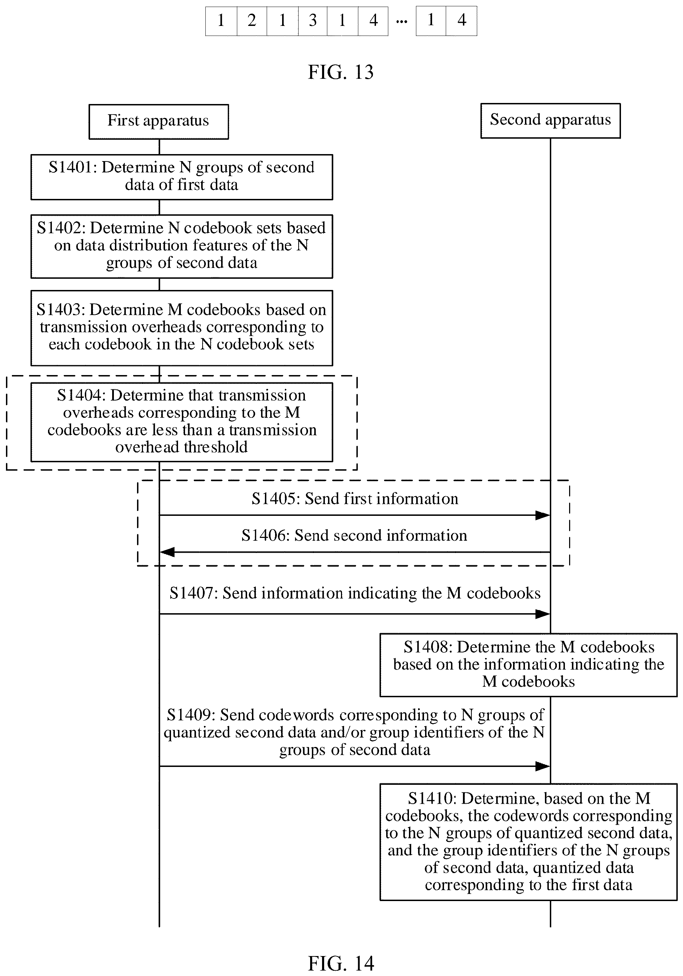

For example, as shown in FIG. 13, each small grid in FIG. 13 represents one codeword, and a number in each small grid represents which group of second data to which the codeword represented by the small grid belongs. There are four groups of second data in total: second data #1, second data #2, second data #3, and second data #4. The sequence of the data in the first data is the second data #1, the second data #2, the second data #1, the second data #3, the second data #1, the second data #4, ..., the second data #1, and the second data #4. Therefore, a sequence of the third data is the second data #1, the second data #2, the second data #1, the second data #3, the second data #1, the second data #4, ..., the second data #1, and the second data #4. In other words, an ellipsis in FIG. 13 represents a plurality of codewords arranged in the sequence of the data in the first data.

It may be understood that when sending the third data in the foregoing three manners, the first apparatus further needs to send a sending manner used by the third data, so that the second apparatus classifies the third data in the sending manner, to obtain a codeword corresponding to each group of quantized second data. The first apparatus may perform sending in a plurality of manners. For example, for Manner 1, the first apparatus may send a quantity of and positions of codewords corresponding to each group of quantized second data. This is not limited herein.

In a possible design solution, the first apparatus sends the group identifiers. Correspondingly, the second apparatus receives the group identifiers. For related descriptions of the group identifiers, refer to the foregoing descriptions. Details are not described herein again.

After receiving the third data, the group identifiers, and the indication information from the first apparatus, the second apparatus may determine, based on the third data, the group identifiers, and the indication information, quantized data corresponding to the first data. Specifically, the M codebooks may be determined based on the indication information, and each piece of data corresponding to each codeword in the third data is determined based on the third data and the M codebooks, to determine fourth data; and then a data sequence of the fourth data is adjusted based on the group identifiers, to obtain the quantized data corresponding to the first data.

It may be further understood that the first apparatus may send the third data and/or the group identifiers together with the indication information, or may send the third data and/or the group identifiers and the indication information in a specific sequence. This is not limited herein.

For example, FIG. 14 is a schematic flowchart 2 of a communication method according to an embodiment of this application. The method is a specific implementation of sending the information indicating the M codebooks in the embodiment in FIG. 4, and the method is applicable to communication between the first apparatus and the second apparatus in the communication system.

As shown in FIG. 14, a procedure of the communication method is as follows.

S1401: The first apparatus determines N groups of second data of first data.

N is an integer greater than 1. For a specific implementation of determining the N groups of second data of the first data, refer to the descriptions of the embodiment in FIG. 4. After the N groups of second data are determined, S1402 in this method may continue to be performed.

S1402: The first apparatus determines N codebook sets based on data distribution features of the N groups of second data.

For a specific implementation of determining the N codebook sets based on the data distribution features of the N groups of second data, refer to the descriptions of the embodiment in FIG. 4. After the N codebook sets are determined, S1403 in this method may continue to be performed.

S1403: The first apparatus determines M codebooks based on transmission overheads corresponding to each codebook in the N codebook sets.

M is a positive integer less than or equal to N. For a specific implementation of determining the M codebooks based on the transmission overheads corresponding to each codebook in the N codebook sets, refer to the descriptions of the embodiment in FIG. 4. After the M codebooks are determined, S1404 or S1405 in this method may continue to be performed.

S1404: The first apparatus determines that transmission overheads corresponding to the M codebooks are less than a transmission overhead threshold.

For a specific implementation of determining that the transmission overheads corresponding to the M codebooks are less than the transmission overhead threshold, refer to the descriptions of the embodiment in FIG. 4. After it is determined that the transmission overheads corresponding to the M codebooks are less than the transmission overhead threshold, S1407 in this method may continue to be performed.

S1405: The first apparatus sends first information. The second apparatus receives the first information.

The first information indicates the transmission overheads corresponding to the M codebooks. For a specific implementation in which the first apparatus sends the transmission overheads corresponding to the M codebooks, and the second apparatus determines whether the transmission overheads corresponding to the M codebooks are less than the transmission overhead threshold, refer to the descriptions of the embodiment in FIG. 4. After the second apparatus receives the first information, S1406 in this method may continue to be performed.

S1406: The second apparatus sends second information. The first apparatus receives the second information.

The second information indicates to use the M codebooks. After determining that the transmission overheads corresponding to the M codebooks are less than the transmission overhead threshold, the second apparatus may send the second information. After the first apparatus receives the second information, S1407 in this method continues to be performed.

S1407: The first apparatus sends information indicating the M codebooks. The second apparatus receives the information indicating the M codebooks.

After the second apparatus receives the information indicating the M codebooks, S1408 in this method may continue to be performed.

S1408: The second apparatus determines the M codebooks based on the information indicating the M codebooks.

For a specific implementation of determining the M codebooks based on the information indicating the M codebooks, refer to the descriptions of the embodiment in FIG. 4.

S 1409: The first apparatus sends codewords corresponding to N groups of quantized second data and/or group identifiers of the N groups of second data. The second apparatus receives the N groups of quantized second data and/or the group identifiers of the N groups of second data.

It may be understood that S1409 and S1407 may be performed simultaneously, or may be performed in a specific sequence. For example, S1409 is performed first, and then S1407 is performed. For another example, S1407 is performed first, and then S1409 is performed. This is not limited herein. After the second apparatus receives the N groups of quantized second data and/or the group identifiers of the N groups of second data, S1410 may continue to be performed in the method.

S1410: The second apparatus determines, based on the M codebooks, the codewords corresponding to the N groups of quantized second data, and the group identifiers of the N groups of second data, quantized data corresponding to the first data.

For a specific implementation of determining, based on the M codebooks, the N groups of quantized second data, and the group identifiers of the N groups of second data, the quantized data corresponding to the first data, refer to the descriptions of the embodiment in FIG. 4.

It may be understood that specific implementations of S1402 to S1406 may be alternatively implemented by using the following steps, for example, S1411.

S1411: The second apparatus determines the M codebooks, and sends the second information. The first apparatus receives the second information.

The second information indicates the M codebooks. For a specific implementation of determining the M codebooks by the second apparatus, refer to the descriptions of the embodiment in FIG. 4. In addition, after determining the M codebooks, the second apparatus may determine whether the transmission overheads corresponding to the M codebooks are less than the transmission overhead threshold. When the transmission overheads corresponding to the M codebooks are less than the transmission overhead threshold, the second apparatus sends the second information.

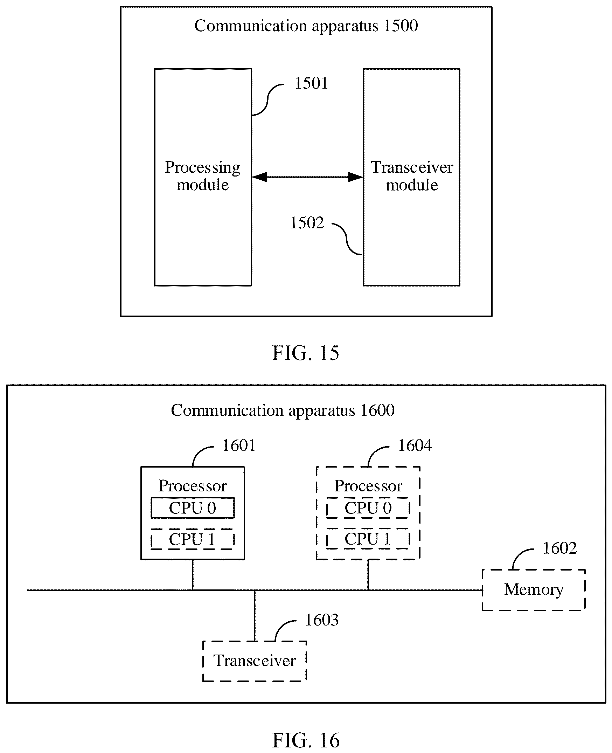

The communication method provided in embodiments of this application is described above in detail with reference to FIG. 4 to FIG. 14. Communication apparatuses configured to perform the communication methods provided in embodiments of this application are described below in detail with reference to FIG. 15 and FIG. 16.

FIG. 15 is a diagram 1 of a structure of a communication apparatus according to an embodiment of this application. For example, as shown in FIG. 15, the communication apparatus 1500 includes a processing module 1501 and a transceiver module 1502. For ease of description, FIG. 15 shows only main components of the communication apparatus.

In some embodiments, the communication apparatus 1500 is applicable to the communication system shown in FIG. 3, and performs a function of the first apparatus in the communication method shown in FIG. 4 or FIG. 14.

For example, the processing module 1501 is configured to determine N groups of second data of first data. The transceiver module 1502 is configured to send information indicating M codebooks, where the M codebooks are determined based on the N groups of second data, the M codebooks are in one-to-one correspondence with the N groups of second data, the M codebooks are used for quantizing the N groups of second data, N is an integer greater than 1, and M is a positive integer less than or equal to N.

In a possible design solution, each of the M codebooks corresponds to at least one codebook set, the codebook set is related to a data distribution feature, and the codebook set includes at least one codebook.

In a possible implementation, the codebook set is determined based on a correspondence between the data distribution feature and a codebook.

In a possible implementation, an $i^{th}$ codebook in the M codebooks is a codebook with smallest transmission overheads in a codebook set to which the $i^{th}$ codebook belongs, and i is an integer greater than or equal to 1 and less than or equal to M.

In a possible implementation, the data distribution feature includes a data distribution slope and/or a data expectation.

In a possible implementation, a quantization error of a codebook in the codebook sets is less than or equal to a quantization error threshold.

Further, the quantization error threshold is preconfigured or predefined.

In a possible design solution, transmission overheads corresponding to the M codebooks are less than a transmission overhead threshold.

In a possible implementation, the transmission overheads include at least one of the following: codebook indication overheads, group identifier overheads, or transmission overheads for N groups of quantized second data.

In a possible design solution, the transceiver module 1502 is further configured to send first information, where the first information indicates the transmission overheads corresponding to the M codebooks.

In a possible design solution, the transceiver module 1502 is further configured to receive second information, where the second information indicates to use the M codebooks, or the second information indicates the M codebooks.

In a possible design solution, the transceiver module 1502 is further configured to send codewords corresponding to N groups of quantized second data and/or group identifiers of the N groups of second data.

In a possible implementation, a sending sequence of the codewords corresponding to the N groups of quantized second data is any one of the following: a sequence of the group identifiers of the N groups of second data, a sequence of the groups of quantized second data that have undergone codeword interleaving, or a sequence of data in the first data.

In a possible implementation, the transceiver module 1502 may include a receiving module and a sending module (not shown in FIG. 15). The transceiver module is configured to implement a sending function and a receiving function of the communication apparatus 1500.

In a possible implementation, the communication apparatus 1500 may further include a storage module (not shown in FIG. 15), and the storage module stores a program or instructions. When the processing module 1501 executes the program or the instructions, the communication apparatus 1500 is enabled to perform the function of the first apparatus in the communication method shown in any one of FIG. 4 to FIG. 14.

It should be understood that the processing module 1501 in the communication apparatus 1500 may be implemented by a processor or a processor-related circuit component, and may be a processor or a processing unit. The transceiver module 1502 may be implemented by a transceiver or a transceiver-related circuit component, and may be a transceiver or a transceiver unit.

It may be understood that the communication apparatus 1500 may be a terminal device or a network device, may be a chip (system) or another part or component that may be disposed in the terminal device or the network device, or may be an apparatus including the terminal device or the network device. This is not limited in this application.

In addition, for technical effects of the communication apparatus 1500, refer to the technical effects of the communication method shown in any one of FIG. 4 to FIG. 14. Details are not described herein again.

In some other embodiments, the communication apparatus 1500 is applicable to the communication system shown in FIG. 3, and performs a function of the second apparatus in the communication method shown in FIG. 4 or FIG. 14.

For example, the transceiver module 1502 is configured to receive information indicating M codebooks. The processing module 1501 is configured to determine the M codebooks based on the information. The M codebooks are determined based on the N groups of second data, the M codebooks are in one-to-one correspondence with the N groups of second data, the M codebooks are used for quantizing the N groups of second data, the N groups of second data are determined based on the first data, N is an integer greater than 1, and M is a positive integer less than or equal to N.

In a possible design solution, each of the M codebooks corresponds to at least one codebook set, the codebook set is related to a data distribution feature, and the codebook set includes at least one codebook.

In a possible implementation, the codebook set is determined based on a correspondence between the data distribution feature and a codebook.

In a possible implementation, an $i^{th}$ codebook in the M codebooks is a codebook with smallest transmission overheads in a codebook set to which the $i^{th}$ codebook belongs, and i is an integer greater than or equal to 1 and less than or equal to M.

In a possible implementation, the data distribution feature includes a data distribution slope and/or a data expectation.

In a possible implementation, a quantization error of a codebook in the codebook sets is less than or equal to a quantization error threshold.

Further, the quantization error threshold is preconfigured or predefined.

In a possible design solution, transmission overheads corresponding to the M codebooks are less than a transmission overhead threshold.

In a possible implementation, the transmission overheads include at least one of the following: codebook indication overheads, group identifier overheads, or transmission overheads for N groups of quantized second data.

In a possible design solution, the transceiver module 1502 is further configured to receive first information, where the first information indicates the transmission overheads corresponding to the M codebooks.

In a possible design solution, the transceiver module 1502 is further configured to send second information, where the second information indicates to use the M codebooks, or the second information indicates the M codebooks.

In a possible design solution, the transceiver module 1502 is further configured to receive codewords corresponding to N groups of quantized second data and/or group identifiers of the N groups of second data.

In a possible implementation, the processing module 1501 is further configured to determine, based on the M codebooks, the codewords corresponding to the N groups of quantized second data, and the group identifier, quantized data corresponding to the first data.

In a possible implementation, a sending sequence of the codewords corresponding to the N groups of quantized second data is any one of the following: a sequence of the group identifiers of the N groups of second data, a sequence of the groups of quantized second data that have undergone codeword interleaving, or a sequence of data in the first data.

In a possible implementation, the communication apparatus 1500 may further include a storage module (not shown in FIG. 15), and the storage module stores a program or instructions. When the processing module 1501 executes the program or the instructions, the communication apparatus 1500 is enabled to perform the function of the second apparatus in the communication method shown in FIG. 4.

It should be understood that the processing module 1501 in the communication apparatus 1500 may be implemented by a processor or a processor-related circuit component, and may be a processor or a processing unit. The transceiver module 1502 may be implemented by a transceiver or a transceiver-related circuit component, and may be a transceiver or a transceiver unit.

It may be understood that the communication apparatus 1500 may be a terminal device or a network device, may be a chip (system) or another part or component that may be disposed in the terminal device or the network device, or may be an apparatus including the terminal device or the network device. This is not limited in this application.

In addition, for technical effects of the communication apparatus 1500, respectively refer to the technical effects of the communication method in any one of FIG. 4 to FIG. 14. Details are not described herein again.

FIG. 16 is a diagram 2 of a structure of a communication apparatus according to an embodiment of this application. For example, the communication apparatus may be a terminal device or a network device, or a chip (system) or another part or component that may be disposed in the terminal device or the network device. As shown in FIG. 16, the communication apparatus 1600 may include a processor 1601. In a possible implementation, the communication apparatus 1600 may further include a memory 1602 and/or a transceiver 1603. The processor 1601 is coupled to the memory 1602 and the transceiver 1603, for example, may be connected via a communication bus.

The following describes components of the communication apparatus 1600 in detail with reference to FIG. 16.

The processor 1601 is a control center of the communication apparatus 1600, and may be one processor, or may be a collective term of a plurality of processing elements. For example, the processor 1601 is one or more central processing units (central processing unit, CPU), may be an application-specific integrated circuit (application-specific integrated circuit, ASIC), or is configured as one or more integrated circuits for implementing embodiments of this application, for example, one or more microprocessors (digital signal processor, DSP) or one or more field programmable gate arrays (field programmable gate array, FPGA).

In a possible implementation, the processor 1601 may perform various functions of the communication apparatus 1600 by running or executing a software program stored in the memory 1602 and invoking data stored in the memory 1602.

During specific implementation, in an embodiment, the processor 1601 may include one or more CPUs, for example, a CPU 0 and a CPU 1 shown in FIG. 16.

During specific implementation, in an embodiment, the communication apparatus 1600 may alternatively include a plurality of processors, for example, the processor 1601 and a processor 1604 shown in FIG. 16. Each of the processors may be a single-core processor (single-CPU), or may be a multi-core processor (multi-CPU). The processor herein may be one or more devices, circuits, and/or processing cores configured to process data (for example, computer program instructions).

The memory 1602 is configured to store the software program for performing the solutions of this application, and the processor 1601 controls the execution. For a specific implementation, refer to the foregoing method embodiments. Details are not described herein again.

In a possible implementation, the memory 1602 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blue-ray disc, or the like), a magnetic disk storage medium or another magnetic storage device, or any other medium that can be used to carry or store expected program code in the form of instruction or data structure and that can be accessed by a computer. However, this is not limited thereto. The memory 1602 may be integrated with the processor 1601, or may exist independently, and is coupled to the processor 1601 through an interface circuit (not shown in FIG. 16) of the communication apparatus 1600. This is not specifically limited in this embodiment of this application.

The transceiver 1603 is configured to communicate with another communication apparatus. For example, the communication apparatus 1600 is a terminal device, and the transceiver 1603 may be configured to communicate with a network device or communicate with another terminal device. For another example, the communication apparatus 1600 is a network device, and the transceiver 1603 may be configured to communicate with a terminal device or communicate with another network device.

In a possible implementation, the transceiver 1603 may include a receiver and a transmitter (not separately shown in FIG. 16). The receiver is configured to implement a receiving function, and the transmitter is configured to implement a sending function.

In a possible implementation, the transceiver 1603 may be integrated with the processor 1601, or may exist independently, and is coupled to the processor 1601 through an interface circuit (not shown in FIG. 16) of the communication apparatus 1600. This is not specifically limited in this embodiment of this application.

It should be noted that the structure of the communication apparatus 1600 shown in FIG. 16 does not constitute a limitation on the communication apparatus. An actual communication apparatus may include more or fewer components than those shown in the figure, or some components may be combined, or different component deployment may be used.

In addition, for technical effects of the communication apparatus 1600, refer to technical effects of the communication method in the foregoing method embodiments. Details are not described herein again.

It should be understood that the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through an example rather than a limitative description, random access memories (random access memory, RAM) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by software, hardware (for example, a circuit), firmware, or any combination thereof. When software is used to implement embodiments, the foregoing embodiments may be implemented completely or partially in the form of a computer program product. The computer program product includes one or more computer instructions or computer programs. When the computer instructions or the computer programs are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid-state drive.

An embodiment of this application further provides a chip. The chip includes a processor. The processor is coupled to the memory. The processor is configured to execute the computer program stored in the memory, so that the chip can perform the method provided in embodiments of this application.

It should be understood that the term "and/or" in this specification describes only an association relationship between associated objects and represents that three relationships may exist. For example, A and/or B may represent the following three cases: Only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof means any combination of these items, including a singular item (piece) or any combination of plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A communication method, wherein the method comprises:

    determining N groups of second data of first data, wherein N is an integer greater than 1; and
    sending information indicating M codebooks, wherein the M codebooks are determined based on the N groups of second data, the M codebooks are in one-to-one correspondence with the N groups of second data, the M codebooks are used for quantizing the N groups of second data, and M is a positive integer less than or equal to N.

2.  The method according to claim 1, wherein each of the M codebooks corresponds to at least one codebook set, the codebook set is related to a data distribution feature, and the codebook set comprises at least one codebook.

3.  The method according to claim 2, wherein the codebook set is determined based on a correspondence between the data distribution feature and a codebook.

4.  The method according to claim 2 or 3, wherein an $i^{th}$ codebook in the M codebooks is a codebook with smallest transmission overheads in a codebook set to which the $i^{th}$ codebook belongs, and i is an integer greater than or equal to 1 and less than or equal to M.

5.  The method according to any one of claims 2 to 4, wherein the data distribution feature comprises a data distribution slope and/or a data expectation.

6.  The method according to any one of claims 2 to 5, wherein a quantization error of a codebook in the codebook set is less than or equal to a quantization error threshold.

7.  The method according to claim 6, wherein the quantization error threshold is preconfigured or predefined.

8.  The method according to any one of claims 1 to 7, wherein transmission overheads corresponding to the M codebooks are less than a transmission overhead threshold.

9.  The method according to claim 8, wherein the transmission overheads comprise at least one of the following: codebook indication overheads, group identifier overheads, or transmission overheads for N groups of quantized second data.

10. The method according to any one of claims 1 to 9, wherein the method further comprises:

EP 4 694 312 A1

sending first information, wherein the first information indicates the transmission overheads corresponding to the M codebooks.

11. The method according to any one of claims 1 to 10, wherein the method further comprises:
receiving second information, wherein the second information indicates to use the M codebooks, or the second information indicates the M codebooks.

12. The method according to any one of claims 1 to 11, wherein the method further comprises:
sending codewords corresponding to the N groups of quantized second data and/or group identifiers of the N groups of second data.

13. The method according to claim 12, wherein a sending sequence of the codewords is any one of the following: a sequence of the group identifiers of the N groups of second data, a sequence of the groups of quantized second data that have undergone codeword interleaving, or a sequence of data in the first data.

14. A communication method, wherein the method comprises:

receiving information indicating M codebooks, wherein the M codebooks are determined based on the N groups of second data, the M codebooks are in one-to-one correspondence with the N groups of second data, the M codebooks are used for quantizing the N groups of second data, the N groups of second data are determined based on first data, N is an integer greater than 1, and M is a positive integer less than or equal to N; and determining the M codebooks based on the information.

15. The method according to claim 14, wherein each of the M codebooks corresponds to at least one codebook set, the codebook set is related to a data distribution feature, and the codebook set comprises at least one codebook.

16. The method according to claim 15, wherein the codebook set is determined based on a correspondence between the data distribution feature and a codebook.

17. The method according to claim 15 or 16, wherein an $i^{th}$ codebook in the M codebooks is a codebook with smallest transmission overheads in a codebook set to which the $i^{th}$ codebook belongs, and i is an integer greater than or equal to 1 and less than or equal to M.

18. The method according to any one of claims 15 to 17, wherein the data distribution feature comprises a data distribution slope and/or a data expectation.

19. The method according to any one of claims 15 to 18, wherein a quantization error of a codebook in the codebook set is less than or equal to a quantization error threshold.

20. The method according to claim 19, wherein the quantization error threshold is preconfigured or predefined.

21. The method according to any one of claims 14 to 20, wherein transmission overheads corresponding to the M codebooks are less than a transmission overhead threshold.

22. The method according to claim 21, wherein the transmission overheads comprise at least one of the following: codebook indication overheads, group identifier overheads, or transmission overheads for N groups of quantized second data.

23. The method according to any one of claims 14 to 22, wherein the method further comprises:
receiving first information, wherein the first information indicates the transmission overheads corresponding to the M codebooks.

24. The method according to any one of claims 14 to 23, wherein the method further comprises:
sending second information, wherein the second information indicates to use the M codebooks, or the second information indicates the M codebooks.

25. The method according to any one of claims 14 to 24, wherein the method further comprises:
receiving codewords corresponding to the N groups of quantized second data and/or group identifiers of the N groups of second data.

26. The method according to claim 25, wherein the method further comprises:
determining, based on the M codebooks, the codewords, and the group identifiers, quantized data corresponding to the first data.

27. The method according to claim 25 or 26, wherein a sending sequence of the codewords is any one of the following: a sequence of the group identifiers of the N groups of second data, a sequence of the groups of quantized second data that have undergone codeword interleaving, or a sequence of data in the first data.

28. A communication apparatus, wherein the apparatus comprises:

a processing module, configured to determine N groups of second data of first data, wherein N is an integer greater than 1; and
a transceiver module, configured to send information indicating the M codebooks, wherein the M codebooks are determined based on the N groups of second data, the M codebooks are in one-to-one correspondence with the N groups of second data, the M codebooks are used for quantizing the N groups of second data, and M is a positive integer less than or equal to N.

29. The apparatus according to claim 28, wherein each of the M codebooks corresponds to at least one codebook set, the codebook set is related to a data distribution feature, and the codebook set comprises at least one codebook.

30. The apparatus according to claim 29, wherein the codebook set is determined based on a correspondence between the data distribution feature and a codebook.

31. The apparatus according to claim 29 or 30, wherein an $i^{th}$ codebook in the M codebooks is a codebook with smallest transmission overheads in a codebook set to which the $i^{th}$ codebook belongs, and i is an integer greater than or equal to 1 and less than or equal to M.

32. The apparatus according to any one of claims 29 to 31, wherein the data distribution feature comprises a data distribution slope and/or a data expectation.

33. The apparatus according to any one of claims 29 to 32, wherein a quantization error of a codebook in the codebook set is less than or equal to a quantization error threshold.

34. The apparatus according to claim 33, wherein the quantization error threshold is preconfigured or predefined.

35. The apparatus according to any one of claims 28 to 34, wherein transmission overheads corresponding to the M codebooks are less than a transmission overhead threshold.

36. The apparatus according to claim 35, wherein the transmission overheads comprise at least one of the following: codebook indication overheads, group identifier overheads, or transmission overheads for N groups of quantized second data.

37. The apparatus according to any one of claims 28 to 36, wherein the transceiver module is further configured to send first information, wherein the first information indicates the transmission overheads corresponding to the M codebooks.

38. The apparatus according to any one of claims 28 to 37, wherein the transceiver module is further configured to receive second information, wherein the second information indicates to use the M codebooks, or the second information indicates the M codebooks.

39. The apparatus according to any one of claims 28 to 38, wherein the transceiver module is further configured to send codewords corresponding to the N groups of quantized second data and/or group identifiers of the N groups of second data.

40. The apparatus according to claim 39, wherein a sending sequence of the codewords is any one of the following: a sequence of the group identifiers of the N groups of second data, a sequence of the groups of quantized second data that have undergone codeword interleaving, or a sequence of data in the first data.

41. A communication apparatus, wherein the apparatus comprises:

a transceiver module, configured to receive information indicating M codebooks, wherein the M codebooks are determined based on the N groups of second data, the M codebooks are in one-to-one correspondence with the N groups of second data, the M codebooks are used for quantizing the N groups of second data, the N groups of second data are determined based on first data, N is an integer greater than 1, and M is a positive integer less than or equal to N; and
a processing module, configured to determine the M codebooks based on the information.

42. The apparatus according to claim 41, wherein each of the M codebooks corresponds to at least one codebook set, the codebook set is related to a data distribution feature, and the codebook set comprises at least one codebook.

43. The apparatus according to claim 42, wherein the codebook set is determined based on a correspondence between the data distribution feature and a codebook.

44. The apparatus according to claim 42 or 43, wherein an $i^{th}$ codebook in the M codebooks is a codebook with smallest transmission overheads in a codebook set to which the $i^{th}$ codebook belongs, and i is an integer greater than or equal to 1 and less than or equal to M.

45. The apparatus according to any one of claims 42 to 44, wherein the data distribution feature comprises a data distribution slope and/or a data expectation.

46. The apparatus according to any one of claims 42 to 45, wherein a quantization error of a codebook in the codebook set is less than or equal to a quantization error threshold.

47. The apparatus according to claim 46, wherein the quantization error threshold is preconfigured or predefined.

48. The apparatus according to any one of claims 41 to 47, wherein transmission overheads corresponding to the M codebooks are less than a transmission overhead threshold.

49. The apparatus according to claim 48, wherein the transmission overheads comprise at least one of the following: codebook indication overheads, group identifier overheads, or transmission overheads for N groups of quantized second data.

50. The apparatus according to any one of claims 41 to 49, wherein the transceiver module is further configured to receive first information, wherein the first information indicates the transmission overheads corresponding to the M codebooks.

51. The apparatus according to any one of claims 41 to 50, wherein the transceiver module is further configured to send second information, wherein the second information indicates to use the M codebooks, or the second information indicates the M codebooks.

52. The apparatus according to any one of claims 41 to 51, wherein the transceiver module is further configured to receive codewords corresponding to the N groups of quantized second data and/or group identifiers of the N groups of second data.

53. The apparatus according to claim 52, wherein the processing module is further configured to determine the first data based on the M codebooks, the codewords, and the group identifiers.

54. The apparatus according to claim 52 or 53, wherein a sending sequence of the codewords is any one of the following: a sequence of the group identifiers of the N groups of second data, a sequence of the groups of quantized second data that have undergone codeword interleaving, or a sequence of data in the first data.

55. A communication apparatus, wherein the communication apparatus comprises a processor and a memory, the memory is configured to store computer instructions, and when the processor executes the instructions, the communication apparatus is enabled to perform the method according to any one of claims 1 to 13, or perform the method according to any one of claims 14 to 27.

56. A communication system, wherein the communication system comprises an apparatus configured to perform the method according to any one of claims 1 to 13, and/or an apparatus configured to perform the method according to any one of claims 14 to 27.

57. A computer-readable storage medium, wherein the computer-readable storage medium comprises a computer program or instructions; and when the computer program or the instructions are run on a computer, the computer is enabled to perform the method according to any one of claims 1 to 13, or perform the method according to any one of claims 14 to 27.

58. A computer program product, wherein the computer program product comprises a computer program or instructions, and when the computer program or the instructions are run by a communication apparatus, the method according to any one of claims 1 to 13 or the method according to any one of claims 14 to 27 is performed.

59. A chip, wherein the chip comprises a processor, the processor is coupled to a memory, and the processor is configured to execute a computer program stored in the memory, to enable the chip to perform the method according to any one of claims 1 to 13, or perform the method according to any one of claims 14 to 27.

FIG. 1

FIG. 2

FIG. 3

FIG. 4

FIG. 5

FIG. 6

FIG. 7

FIG. 8

FIG. 9

FIG. 10

FIG. 11

FIG. 12

| 1 | 2 | 1 | 3 | 1 | 4 | ... | 1 | 4 |

FIG. 13

First apparatus            Second apparatus

S1401: Determine N groups of second data of first data

S1402: Determine N codebook sets based on data distribution features of the N groups of second data

S1403: Determine M codebooks based on transmission overheads corresponding to each codebook in the N codebook sets

S1404: Determine that transmission overheads corresponding to the M codebooks are less than a transmission overhead threshold

S1405: Send first information

S1406: Send second information

S1407: Send information indicating the M codebooks

S1408: Determine the M codebooks based on the information indicating the M codebooks

S1409: Send codewords corresponding to N groups of quantized second data and/or group identifiers of the N groups of second data

S1410: Determine, based on the M codebooks, the codewords corresponding to the N groups of quantized second data, and the group identifiers of the N groups of second data, quantized data corresponding to the first data

FIG. 14

Communication apparatus 1500

1501

Processing module ◄──────► Transceiver module

1502

FIG. 15

Communication apparatus 1600

1601

Processor

CPU 0

CPU 1

1604

Processor

CPU 0

CPU 1

1602

Memory

1603

Transceiver

FIG. 16

## INTERNATIONAL SEARCH REPORT

| International application No. |
| --- |
| **PCT/CN2023/094062** |

| A. | CLASSIFICATION OF SUBJECT MATTER |
| --- | --- |
| | H04W28/06(2009.01)i |

According to International Patent Classification (IPC) or to both national classification and IPC

| B. | FIELDS SEARCHED |
| --- | --- |

Minimum documentation searched (classification system followed by classification symbols)

    IPC：H04W

Documentation searched other than minimum documentation to the extent that such documents are included in the fields searched

Electronic data base consulted during the international search (name of data base and, where practicable, search terms used)

    CNTXT, ENTXT, DWPI: 人工智能, 数据, 传输, 开销, 分组, 量化, 码本, 分布, AI, data, tranmission, group, quantization, codebook, distribution

| C. | DOCUMENTS CONSIDERED TO BE RELEVANT | |
| --- | --- | --- |

| Category* | Citation of document, with indication, where appropriate, of the relevant passages | Relevant to claim No. |
| --- | --- | --- |
| A | CN 109474349 A (ZHEJIANG UNIVERSITY OF TECHNOLOGY) 15 March 2019 (2019-03-15) <br> description, paragraphs [0010]-[0023] | 1-59 |
| A | CN 101145787 A (HUAWEI TECHNOLOGIES CO., LTD.) 19 March 2008 (2008-03-19) <br> entire document | 1-59 |
| A | CN 101582261 A (HARBIN INSTITUTE OF TECHNOLOGY (SHENZHEN)) 18 November 2009 (2009-11-18) <br> entire document | 1-59 |
| A | CN 110069715 A (TENCENT TECHNOLOGY (SHENZHEN) CO., LTD.) 30 July 2019 (2019-07-30) <br> entire document | 1-59 |
| A | JP 2001169279 A (JAPAN SCIENCE & TECHNOLOGY CORP.) 22 June 2001 (2001-06-22) <br> entire document | 1-59 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **30 November 2023** | **11 December 2023** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| :--- |
| **PCT/CN2023/094062** |

| Patent document cited in search report | | | Publication date (day/month/year) | Patent family member(s) | Publication date (day/month/year) |
| :--- | :--- | :--- | :--- | :--- | :--- |
| CN | 109474349 | A | 15 March 2019 | None | |
| CN | 101145787 | A | 19 March 2008 | None | |
| CN | 101582261 | A | 18 November 2009 | None | |
| CN | 110069715 | A | 30 July 2019 | None | |
| JP | 2001169279 | A | 22 June 2001 | None | |

Form PCT/ISA/210 (patent family annex) (July 2022)